# EUROPEAN PATENT APPLICATION

(11) **EP 3 670 023 A1**
(43) Date of publication of application: **24.06.2020**
(21) Application number: 19218372.1
(22) Date of filing: 19.12.2019
(51) Int. Cl.: B21J 15/42, B21J 15/14, B64F 5/10

(54) **METHOD AND APPARATUS FOR SINGLE-SIDED CLAMP-UP**

(30) Priority: 21.12.2018 US 201816230189; 21.12.2018 US 201816230280; 21.12.2018 US 201816230370; 08.02.2019 NL 2022543
(71) Applicant: The Boeing Company, Chicago, IL 60606-1596 (US)
(72) Inventor: OBEROI, Harinder S., Chicago, IL Illinois 60606-1596 (US); BARRICK, Kevin Marion, Chicago, IL Illinois 60606-1596 (US); HU, Charles Yuanxin, Chicago, IL Illinois 60606-1596 (US)
(74) Representative: Duxbury, Stephen

(57) **Abstract**

Methods and apparatuses for aligning a first hole in a first panel (410) with a second hole in a second panel (412) to define a through-hole. A wall that defines the second hole is gripped from within the through-hole to pull the second panel towards the first panel and thereby establish a clamp-up of the first panel and the second panel.

## Description

### FIELD

This disclosure generally relates to the assembly of parts and, more particularly, to methods and apparatuses that use suction to establish a single-sided clamp-up of parts, maintain a single-sided clamp-up of parts, or both.

### BACKGROUND

Automating certain operations during the assembly of structures may increase assembly accuracy, improve assembly efficiency, and reduce overall assembly. For example, the tasks involved in the joining of two parts may be automated. These tasks may include clamping together the two parts, drilling holes through the two parts, inspecting the drilled holes, and inserting fasteners through the drilled holes.

Currently, some fastener installation operations are automated using robots with multi-function end effectors. A multi-function end effector may be a machine with multiple moving parts that work together to perform the various tasks involved in fastener installation, including clamping, drilling, inspection, and fastener insertion. One or more of these tasks may require that parts be held in place together (*e.g.,* clamped up) in order for a fastener to be installed through the parts. Some currently available systems for maintaining the clamp-up of parts may be more complex and less efficient than desired for performing certain types of assembly operations.

### SUMMARY

In one example embodiment, a method for performing a fastener installation is provided. A first mechanical force is applied to a first part and a second mechanical force is applied to a second part to form a clamp-up of the first part and the second part. Air is suctioned through a fastener hole, which is formed by a first hole in the first part that is aligned with a second hole in the second part, to pull the second part towards the first part and thereby maintain the clamp-up of the first part and the second part.

In still yet another example embodiment, a method is provided for aligning a first hole in a first panel with a second hole in a second panel to define a through-hole. A wall that defines the second hole is gripped from within the through-hole to pull the second panel towards the first panel and thereby establish a clamp-up of the first panel and the second panel.

In another example embodiment, a method for maintaining a clamp-up is provided. A first mechanical force and a second mechanical force are applied to a first part and a second part, respectively, to form the clamp-up. The first part forms a first side of the clamp-up and the second part forms a second side of the clamp-up. Air is suctioned, from the first side of the clamp-up, through a fastener hole that extends through the first part and the second part to pull the second part towards the first part. The first mechanical force and the second mechanical force are removed simultaneously while continuing to suction such that the suctioning independently maintains the clamp-up after removal of the first mechanical force and the second mechanical force.

The features and functions can be achieved independently in various embodiments of the present disclosure or may be combined in yet other embodiments in which further details can be seen with reference to the following description and drawings.

The disclosure also includes the following paragraphs:
1. A method for performing a fastener installation, the method comprising:
   applying (1602) a first mechanical force (342) to a first part (308) and a second mechanical force (344) to a second part (310) to form a clamp-up (341) of the first part (308) and the second part (310), the first part (308) forming a first side (311) of the clamp-up (341) and the second part (310) forming a second side (312) of the clamp-up (341); and
   suctioning (1606) air, from the first side (311) of the clamp-up (341), through a fastener hole (346) that passes through the first part (308) and the second part (310) to pull the second part (310) towards the first part (308) and thereby maintain the clamp-up (341) of the first part (308) and the second part (310).
2. The method of paragraph 1, further comprising:
   removing (1608) the first mechanical force (342) and the second mechanical force (344) while continuing to suction the air through the fastener hole (346) such that the clamp-up (341) of the first part (308) and the second part (310) is maintained even after the first mechanical force (342) and the second mechanical force (344) have been removed.
3. The method of paragraph 1, further comprising:
   aligning (1802) a first hole (343) in the first part (308) and a second hole (345) in the second part (310) to form the fastener hole (346).
4. The method of paragraph 3, wherein aligning comprises:
   aligning (2302) the first hole (343) with the second hole (345) such that the first hole (343) and the second hole (345) are concentrically aligned.
5. The method of paragraph 3, wherein aligning comprises:
   aligning (2302) the first hole (343) with the second hole (345) such that the first hole (343) and the second hole (345) are coaxially aligned.
6. The method of paragraph 3, wherein suctioning (1606) the air through the fastener hole (346) comprises:
   suctioning the air through the fastener hole (346) to grip a wall (347) that defines the second hole (345) and thereby pull the second part (310) towards the first part (308).
7. The method of paragraph 3, wherein suctioning (1606) the air through the fastener hole (346) further comprises:
   suctioning, from the first side (311) of the clamp-up (341), the air through the fastener hole (346) in a direction towards the first part (308) and at a volumetric flow rate sufficient to maintain a gripping of a wall (347) that defines the second hole (345) while overcoming a volume of suction lost at the second side (312) of the clamp-up (341).
8. The method of paragraph 3, wherein suctioning (1606) the air through the fastener hole (346) comprises:
   maintaining a partial vacuum sufficiently strong to grip a wall (347) that defines the second hole (345) to pull the second part (310) towards the first part (308) despite any loss of suction at the second side (312) of the clamp-up (341).
9. The method of paragraph 1, further comprising:
   drilling (1604), by a drilling tool (338) positioned at the second side (312), the fastener hole (346) after forming the clamp-up (341) of the first part (308) and the second part (310) with the first mechanical force (342) and the second mechanical force (344), respectively, wherein the fastener hole (346) is formed by a first hole (343) in the first part (308) and a second hole (345) in the second part (310).
10. The method of paragraph 9, further comprising:
   inserting (1610) a fastener (348) within the fastener hole (346) while continuing to suction the air through the fastener hole (346) to thereby maintain the clamp-up (341) of the first part (308) and the second part (310) during insertion of the fastener (348).
11. The method of paragraph 9, wherein suctioning (1606) the air through the fastener hole (346) comprises:
   suctioning the air through the fastener hole (346) from the first side (311) of the clamp-up (341) during at least a portion of drilling of the fastener hole (346).
12. The method of paragraph 9, wherein suctioning (1606) the air through the fastener hole (346) comprises:
   suctioning the air through the fastener hole (346) from the first side (311) of the clamp-up (341) after the fastener hole (346) has been drilled.
13. The method of paragraph 1, wherein suctioning (1606) the air through the fastener hole (346) comprises:
   suctioning the air through the fastener hole (346) at a volumetric flow rate sufficient to maintain the clamp-up (341) of the first part (308) and the second part (310) relative to each other without requiring use of the second mechanical force (344).
14. The method of paragraph 1, wherein applying (1602) the first mechanical force (342) to the first part (308) and the second mechanical force (344) to the second part (310) comprises:
   applying the first mechanical force (342) to the first part (308) using a first tool (332) coupled to a first end effector (324); and
   applying the second mechanical force (344) to the second part (310) using a second tool (336) coupled to a second end effector (326), wherein the second mechanical force (344) is equal and opposite to the first mechanical force (342) until the clamp-up (341) is first established.
15. The method of paragraph 14, wherein the first tool (332) is a nozzle (332) that is coupled to a suction device (330) of the first end effector (324).
16. The method of paragraph 14, further comprising:
   drilling (1604) the fastener hole (346) by drilling a first hole (343) through the first part (308) and a second hole (345) through a second part (310) in which the first hole (343) and the second hole (345) are coaxially or concentrically aligned, wherein application of the second mechanical force (344) continues at least until after drilling of the fastener hole (346).
17. The method of paragraph 1, further comprising:
   removing the second mechanical force (344) after the fastener hole (346) has been drilled and after the suctioning of the air through the fastener hole (346) has begun.
18. The method of paragraph 1, further comprising:
   drilling (1604) the fastener hole (346) using a drilling tool (338) of a first end effector (324) that is positioned relative to the second side (312) of the clamp-up (341), wherein the fastener hole (346) is a coaxial hole formed by a first hole (343) through the first part (308) and a second hole (345) through the second part (310).
19. The method of paragraph 18, further comprising:
   moving the first end effector (324) away from the clamp-up (341);
   positioning a second end effector (326) relative to the second side (312) of the clamp-up (341); and
   installing (1610) a fastener (348) within the fastener hole (346) using the second end effector (326) while continuing to suction the air through the fastener hole (346) to maintain the positioning of the first part (308) and the second part (310) relative to each other.
20. The method of paragraph 1, wherein suctioning (1606) the air through the fastener hole (346) comprises:
   drawing a partial vacuum through the fastener hole (346) and through a nozzle (332) positioned relative to the first part (308) at the first side (311) of the clamp-up (341) to maintain the clamp-up (341).
21. A portion of an aircraft (314) that is assembled using the method of paragraph 1.
22. A method for performing a fastener installation, the method comprising:
   aligning (1802) a first hole (343) in a first panel (402) with a second hole (345) in a second panel (404) to define a through-hole; and
   gripping (1804) a wall (347) that defines the second hole (345) from within the through-hole to pull the second panel (404) towards the first panel (402) and thereby establish a clamp-up (341) of the first panel (402) and the second panel (404).
23. The method of paragraph 22, wherein gripping (1804) the wall (347) comprises:
   gripping the wall (347) of the second hole (345) from within the through-hole using suction to pull the second panel (404) towards the first panel (402) and thereby provide the clamp-up (341) of the first panel (402) and the second panel (404).
24. A method for maintaining a clamp-up (341), the method comprising: applying (1702) a first mechanical force (342) and a second mechanical force (344) to a first part (308) and a second part (310), respectively, to form the clamp-up (341), wherein the first part (308) forms a first side (311) of the clamp-up (341) and the second part (310) forms a second side (312) of the clamp-up (341); suctioning (1704), from the first side (311) of the clamp-up (341), air through a fastener hole (346) that extends through the first part (308) and the second part (310) to pull the second part (310) towards the first part (308); and removing (1706) the first mechanical force (342) and the second mechanical force (344) simultaneously while continuing to suction such that the suctioning independently maintains the clamp-up (341) after removal of the first mechanical force (342) and the second mechanical force (344).
25. The method of paragraph 24, wherein applying (1702) the first mechanical force (342) and the second mechanical force (344) comprises:
   applying the first mechanical force (342) to the first part (308) using a first tool (332) coupled to a first end effector (324); and
   applying the second mechanical force (344) to the second part (310) using a second tool (336) coupled to a second end effector (326),
   wherein the second mechanical force (344) is equal and opposite to the first mechanical force (342) until the clamp-up (341) is first established.
26. The method of paragraph 24, wherein the suctioning (1704) comprises: drawing a partial vacuum to grip a hole wall of a portion of the fastener hole (346) in the second part (310) to pull the second part (310) towards the first part (308).
27. A method for providing a clamp-up (341), the method comprising:
   suctioning (1902), from a first side (311) of a clamp-up (341) of a first part (308) and a second part (310), air through a fastener hole (346) formed by a first hole (343) in the first part (308) and a second hole (345) in the second part (310) to pull the second part (310) towards the first part (308) and thereby provide the clamp-up (341) of the first part (308) and the second part (310).
28. The method of paragraph 27, wherein suctioning (1902) comprises:
   suctioning, from the first side (311) of the clamp-up (341), the air through the fastener hole (346) to grip a wall (347) that defines the second hole (345) in the second part (310) to thereby pull the second part (310) towards the first part (308),
   wherein a force static equilibrium is established by a suction force (802) produced by the suctioning and a reactive force (804) produced by a contact surface of a first tool (332) at the first side (311) of the clamp-up (341).
29. The method of paragraph 28, wherein a first mechanical force (342) is applied by a first tool (332) at the first side (311) of the clamp-up (341) and a second mechanical force (344) is applied by a second tool (336) at a second side (312) of the clamp-up (341) during the suctioning.
30. The method of paragraph 29, wherein the first mechanical force (342) and the second mechanical force (344) are applied at least until a force static equilibrium is established by a suction force (802) produced by the suctioning and a reactive force (804) produced by a contact surface of the first tool (332) at the first side (311) of the clamp-up (341).
31. The method of paragraph 30, further comprising:
   removing (1904) the first mechanical force (342) and second mechanical force (344) after the force static equilibrium has been reached, wherein the suction force (802) and the reactive force (804) provide the clamp-up (341) of the first part (308) and the second part (310) without the first mechanical force (342) and the second mechanical force (344).
32. The method of paragraph 27, further comprising:
   installing (1906) a fastener (348) through the fastener hole (346) while continuing to suction the air through the fastener hole (346), wherein suctioning is performed at least until the fastener (348) is fully installed.
33. The method of paragraph 27, wherein suctioning (1902), from the first side (311) of the clamp-up (341) of the first part (308) and the second part (310), the air through the fastener hole (346) comprises:
   suctioning, from the first side (311) of the clamp-up (341), the air through the fastener hole (346) in a direction towards the first part (308) and at a volumetric flow rate sufficient to grip a wall (347) that defines the second hole (345) while overcoming a volume of suction lost at an open end of the second hole (345) at a second side (312) of the clamp-up (341).
34. The method of paragraph 27, further comprising:
   aligning (1802) the first hole (343) in the first part (308) and the second hole (345) in the second part (310) to form the fastener hole (346).
35. The method of paragraph 34, wherein aligning comprises:
   aligning (2302) the first hole (343) with the second hole (345) such that the first hole (343) and the second hole (345) are at least one of concentrically or coaxially aligned.
36. The method of paragraph 27, wherein a suction force (802) produced by the suctioning (1902) is sufficient to provide the clamp-up (341) during and after a fastener (348) has been inserted through the fastener hole (346) from a second side (312) of the clamp-up (341).
37. The method of paragraph 27, further comprising:
   aligning (1802) a first hole (343) in the first part (308) with a second hole (345) in a second part (310) to define the fastener hole (346); and
   wherein the suctioning(1902) comprises: gripping (1804) a wall (347) that defines the second hole (345) from within the fastener hole (346) to pull the second part (310) towards the first part (308) and thereby provide the clamp-up (341) of the first part (308) and the second part (310).
38. A portion of an aircraft (314) assembled using the method of paragraph 27.
39. A method for maintaining a clamp-up (341), the method comprising:
   applying (2102), by a first end effector (324) at a first side (311) of a panel joint (400), a first force (342) via contact with the first side (311) of a panel joint (400); applying (2104), by a second end effector (326) at a second side (312) of the panel joint (400), a second force (344) that is equal and opposite to the first force (342) via contact with the second side (312) of the panel joint (400) to establish the clamp-up (341); and
   maintaining (2106), by the first end effector (324) at the first side (311) of the panel joint (400), the clamp-up (341) after the second end effector (326) is removed from contact with the second side (312).
40. The method of paragraph 39, wherein maintaining (2106) the clamp-up (341) comprises:
   locating a fastener hole (346) through the panel joint (400); and
   drawing a partial vacuum through the fastener hole (346).
41. The method of paragraph 39, wherein the panel joint (400) is a lap splice (400) comprised of two skin panels (402, 404).
42. The method of paragraph 39, further comprising:
   aligning (1802) a first hole (343) in a first panel (402) of the panel joint (400) with a second hole (345) in a second panel (404) of the panel joint (400) to define a fastener hole (346); and
   wherein maintaining the clamp-up (341) comprises:
      gripping (1804) a wall (347) that defines the second hole (345) from within the fastener hole (346) to pull the second panel (404) towards the first panel (402) and thereby maintain the clamp-up (341) of the first panel (402) and the second panel (404).
43. The method of paragraph 39, wherein maintaining (2106) the clamp-up (341) comprises:
   applying a suction force (802) on one part of the panel joint (400) that forms the second side (312) of the panel joint (400); and
   applying a reactive force (804) on another part of the panel joint (400) that forms the first side (311) of the panel joint (400), wherein the suction force (802) and the reactive force (804) establish a force static equilibrium.
44. A method for providing a single-sided clamp-up (341):
   applying (2202), by a single function end effector (324) positioned at a first side (311) of a panel joint (400), a first force (802) to a first panel (402) of the panel joint (400); and
   applying (2204), by the single function end effector (324), a second force (804) that is equal and opposite to the first force (802) to a second panel (404) of the panel joint (400) to thereby provide the single-sided clamp-up (341) of the first panel (402) and the second panel (804).
45. The method of paragraph 44, wherein the panel joint (400) is a lap splice (400) and the first panel (402) (402) and the second panel (404) (404) are skin panels.
46. The method of paragraph 44, wherein applying (2204) the second force (804) comprises:
   applying a suction force (802) that pulls the second panel (404) to the first panel (402).
47. The method of paragraph 46, wherein applying (2202) the first force (802) comprises:
   applying a reactive force (804) in response to the suction force (802) via a surface of a tool (332) that is in contact with the first panel (402) to thereby provide the single-sided clamp-up (341).
48. A method of providing a clamp-up (341), the method comprising:
   reaching (2304) through a first hole (343) in a first part (308) to grip a wall (347) that defines a second hole (345) in a second part (310) to thereby pull the second part (310) against the first part (308).
49. The method of paragraph 48, wherein reaching (2304) comprises:
   creating a pressure differential that acts on the wall (347) of the second hole (345) in the second part (310) to pull the second part (310) against the first part (308).
50. The method of paragraph 48, wherein reaching (2304) comprises:
   suctioning, by a suction device (330) positioned relative to the first part (308), air through the first hole (343) and the second hole (345) to pull the second part (310) towards the first part (308).
51. The method of paragraph 48, further comprising:
   aligning (2302) the first hole (343) with the second hole (345) at least one of concentrically or coaxially prior to reaching through the first hole (343) in the first part (308) to grip the wall (347).
52. The method of paragraph 48, further comprising:
   applying (2002) a first mechanical force (342) to the first part (308) and a second mechanical force (344) to the second part (310) to form a clamp-up (341) of the first part (308) and the second part (310), the first part (308) forming a first side (311) of the clamp-up (341) and the second part (310) forming a second side (312) of the clamp-up (341).
53. The method of paragraph 52, further comprising:
   drilling (1604) through the clamp-up (341) using a drilling tool (338) positioned at the second side (312) of the clamp-up (341) to form the second hole (345) in the second part (310) and the first hole (343) in the first part (308).
54. The method of paragraph 53, further comprising:
   removing the first mechanical force (342) and the second mechanical force (344), after the wall (347) of the second hole (345) has been gripped via the reaching step, wherein gripping of the wall (347) maintains the clamp-up (341) after the first mechanical force (342) and the second mechanical force (344) have been removed.
55. The method of paragraph 48, wherein the first part (308) and the second part (310) are skin panels that form a panel joint (400).
56. An apparatus for maintaining a clamp-up (341), the apparatus comprising:
   a nozzle (332) having a nozzle (332) diameter greater than a hole diameter of a first hole (343) in a first part (308), the nozzle (332) being used to apply a first mechanical force (342) to a first side (311) of the clamp-up (341) when engaged with the first part (308); and
   a suction device (330) for suctioning air, from the first side (311) of the clamp-up (341), through a fastener hole (346) formed by the first hole (343) in the first part (308) and a second hole (345) in a second part (310) and through the nozzle (332), wherein the air is suctioned with a volumetric flow rate sufficient to maintain the clamp-up (341) of the first part (308) and the second part (310) from the first side (311) without requiring an additional force at a second side (312) of the clamp-up (341).
57. The apparatus of paragraph 56, further comprising:
   an extension system for moving a first tool (332) towards a first side (311) of the clamp-up (341) to apply a force (342) to the first part (308).
58. The apparatus of paragraph 57, wherein the first tool (332) is the nozzle (332).
59. The apparatus of paragraph 57, wherein the extension system, the nozzle (332), and the suction device (330) are part of a same end effector (324).
60. The apparatus of paragraph 56, further comprising:
   a first extension system for moving a first tool (332) towards a first side (311) of the clamp-up (341) to apply the first mechanical force (342) to the first part (308); and
   a second extension system for moving a second tool (336) towards a second side (312) of the clamp-up (341) up to apply a second mechanical force (344) to the second part (310), wherein the second mechanical force (344) is removed after suctioning of the air through the fastener hole (346) has begun.
61. The apparatus of paragraph 56, further comprising:
   an automated guided vehicle; and
   an end effector (324) coupled to the automated guided vehicle, wherein the end effector includes the nozzle (332) and the suction device (330).
62. A method for maintaining the clamp-up (341) of the first part (308) and the second part (310) for a fuselage assembly (313) using the apparatus of paragraph 56.
63. An apparatus for forming a clamp-up (341), the apparatus comprising:
   an end effector (324) positioned at a first side (311) of a panel joint (400) that applies a first clamp-up force (802) to a first panel (402) of a panel joint (400) and an equal and opposite second clamp-up force (804) to a second panel (404) of the panel joint (400) to provide the clamp-up (341).
64. The apparatus of paragraph 63, wherein the end effector (324) applies the first clamp-up force (802) via contact with the first side (311) of the panel joint (400) and the end effector (324) applies the second clamp-up force (804) via contact with a second side (312) of the panel joint (400).
65. The apparatus of paragraph 63, wherein a first hole (343) in a first panel (402) of the panel joint (400) is aligned with a second hole (345) in a second panel (404) of the panel joint (400) to define a fastener hole (346) and wherein the end effector (324) grips a wall (347) that defines the second hole (345) from within the fastener hole (346) to pull the second panel (404) towards the first panel (402) and thereby provide the clamp-up (341).
66. The apparatus of paragraph 63, wherein the panel joint (400) (400) is a splice joint (400) comprised of skin panels.
67. The apparatus of paragraph 63, wherein the end effector (324) comprises:
   a suction device (330) that draws a partial vacuum through a fastener hole (346) that extends through the panel joint (400) to provide the first clamp-up force.
68. The apparatus of paragraph 67, wherein the end effector (324) comprises:
   a surface that is in contact with the first panel (402) of the panel joint (400) and provides the equal and opposite second clamp-up force.
69. A method for maintaining the clamp-up (341) of two skin panels for a fuselage assembly (313) using the apparatus of paragraph 63.
70. An apparatus for forming a clamp-up (341), the apparatus comprising:
   a first clamp-up end effector (324) on a first side (311) of a panel joint (400); a second clamp-up end effector (326) on a second side (312) of a panel joint (400), wherein the first clamp-up end effector (324) is in communication with the second clamp-up end effector (326); and
   a through-hole clamping device (332, 330) incorporated into the first clamp-up end effector (324).
71. The apparatus of paragraph 70, wherein the through-hole clamping device comprises:
   a hole wall gripping device (330); and
   a contact device (332) coupled to the hole wall gripping device (330), the contact device (332) being in contact with the first side (311) of the panel joint (400).
72. The apparatus of paragraph 71, wherein the hole wall gripping device (330) is a suction device (330).
73. The apparatus of paragraph 72, wherein the contact device (332) is a nozzle (332) comprising:
   a surface for contacting the first side (311) of the panel joint (400); and
   a channel (334) through which the suction device (330) suctions air.
74. The apparatus of paragraph 70, wherein the through-hole clamping device (324) comprises:
   a hole wall gripping device (330) that independently provides a single-sided clamp-up (341) of a first panel (402) and a second panel (404) of the panel joint (400) without the second clamp-up end effector (326).
75. The apparatus of paragraph 70, wherein the through-hole clamping device (332, 330) comprises:
   a suction device (330) that draws a partial vacuum through a fastener hole (346) that extends through the panel joint (400).
76. A method for maintaining the clamp-up (341) of two skin panels (402, 404) for a fuselage assembly (313) using the apparatus of paragraph 70.

### BRIEF DESCRIPTION OF THE DRAWINGS

The novel features believed characteristic of the example embodiments are set forth in the appended claims. The example embodiments, however, as well as a preferred mode of use, further objectives and features thereof, will best be understood by reference to the following detailed description of an example embodiment of the present disclosure when read in conjunction with the accompanying drawings.
**Figure 1** is an illustration of a perspective view of manufacturing environment **100** in accordance with an example embodiment.
**Figure 2** is an illustration of an end view of the fuselage assembly from **Figure 1** being built in accordance with an example embodiment.
**Figure 3** is a block diagram of a manufacturing environment in accordance with an example embodiment.
**Figure 4** is an illustration of a side view of robotic devices with single function end effectors positioned relative to an assembly in accordance with an example embodiment.
**Figure 5** is an illustration of an enlarged side view of end effectors from **Figure 4** positioned relative to the lap splice from **Figure 4** in accordance with an example embodiment.
**Figure 6** is an illustration of a side view of the end effectors from **Figure 4** applying forces to the lap splice from **Figure 4** in accordance with an example embodiment.
**Figure 7** is an illustration of a side view of a drilling operation in accordance with an example embodiment.
**Figure 8** is an illustration of a side view of a suctioning operation in accordance with an example embodiment.
**Figure 9** is an illustration of an enlarged cross-sectional side view of the parts from **Figure 8** in accordance with an example embodiment.
**Figure 10** is an illustration of an enlarged side view of a single-sided clamp-up in accordance with an example embodiment.
**Figure 11** is an illustration of another side view of the single-sided clamp-up from **Figure 10** in accordance with an example embodiment.
**Figure 12** is an illustration of a perspective view of an end effector positioned relative to a second side of the lap splice from **Figure 11** in accordance with an example embodiment.
**Figure 13** is an illustration of a side view of a fastener insertion tool being used to insert the fastener (shown in **Figures 11** and **12**) into the fastener hole (shown in **Figure 11**) in accordance with an example embodiment.
**Figure 14** is an illustration of a cross-sectional view of the installed fastener in the lap splice in accordance with an example embodiment.
**Figure 15** is an illustration of a completion of the fastener installation operation in accordance with an example embodiment.
**Figure 16** is a flowchart of a method for performing a fastener installation in accordance with an example embodiment.
**Figure 17** is a flowchart of a process for maintaining a clamp-up in accordance with an example embodiment.
**Figure 18** is a flowchart of a process for maintaining a clamp-up in accordance with an example embodiment.
**Figure 19** is a flowchart of a process for maintaining a single-sided clamp-up in accordance with an example embodiment.
**Figure 20** is a flowchart of a process for maintaining a single-sided clamp-up in accordance with an example embodiment.
**Figure 21** is a flowchart of a process for maintaining a single-sided clamp-up in accordance with an example embodiment.
**Figure 22** is a flowchart of a process for maintaining a single-sided clamp-up in accordance with an example embodiment.
**Figure 23** is a flowchart of a process for providing a clamp-up in accordance with an example embodiment.
**Figure 24** is a block diagram of a data processing system in accordance with an example embodiment.
**Figure 25** is an illustration of an aircraft manufacturing and service method in accordance with an example embodiment.
**Figure 26** is a block diagram of an aircraft in accordance with an example embodiment.

### DETAILED DESCRIPTION

The example embodiments described below provide methods and apparatuses for improving the efficiency and ease of joining parts together. For example, the methods and apparatuses described below may improve the efficiency and ease and reduce the complexity of installing fasteners to join parts together. The example embodiments recognize and take into account that single function end effectors allow the various tasks (*e.g.,* drilling, inspection, fastener insertion) of a fastener installation operation to be separated. By using a different single function end effector for the different tasks, the end effectors may be made smaller, lighter, and less complex than multifunction end effectors.

The simplicity of single function end effectors may help improve the overall efficiency and reliability of using end effectors to automate fastener installation operations. Further, the simplicity of single function end effectors may reduce the amount of maintenance required, the overall size of the supporting robot and associated structure, or both.

In particular, the example embodiments recognize and take into account that the parts of an assembly through which a fastener is being installed need to be held in place together (*e.g*., clamped together) while the single function end effectors are being switched out to perform the various tasks. The example embodiments provide methods and apparatuses for holding these parts together from one side of the assembly to enable the switching out of single function end effectors on the other side of the assembly.

In one example embodiment, a method is provided for automating a fastener installation. A first mechanical force is applied to a first part and a second mechanical force is applied to a second part to form a clamp-up of the first part and the second part. Air is suctioned through a fastener hole, which is formed by a first hole in the first part that is aligned with a second hole in the second part, to pull the second part towards the first part and thereby maintain the clamp-up of the first part and the second part even after the second mechanical force has been removed.

In another example embodiment, method is provided for aligning a first hole in a first panel with a second hole in a second panel to define a through-hole. A wall that defines the second hole is gripped from within the through-hole to pull the second panel towards the first panel and thereby establish a clamp-up of the first panel and the second panel.

In yet another example embodiment, a method is provided for using a single function end effector to maintain a clamp-up. The single function end effector is positioned at one side of a panel joint and applies both a first force on a first panel of the panel joint and a second force on a second panel of the panel joint to maintain the clamp-up. The first force may be, for example, a suction force, while the second force may be, for example, a reactive force applied in response to the suction force. In this manner, a single-sided clamp-up is achieved.

Thus, the example embodiments provide methods and systems for establishing a clamp-up, maintaining a clamp-up, or both of a first panel and a second panel. These methods and systems involve gripping a wall that defines a hole in the second panel from within a hole in the first panel to pull the second panel towards the first panel. The first hole and the second hole form a through-hole extending through the first panel and the second panel.

This gripping may be performed by, for example, drawing a partial vacuum (*e.g.,* suctioning) through a fastener hole (*e.g.,* the through-hole) in a direction from the second panel towards the first panel. This gripping force is combined with an opposing force (*e.g.,* a reactive force) created by the single function end effector being positioned in contact with the first panel. In this manner, single-sided clamp-up is achieved. The clamp-up is formed from the side of the first panel to allow movement of tools and devices and provide space for any number of operations to be performed at the side of the second panel.

In some cases, one or more panels may be present between the first panel and the second panel. The fastener hole extends through the first panel, the second panel, and any number of panels between the first and second panels. In other cases, sealant is applied on the faying surfaces of one or both of the first and second panels.

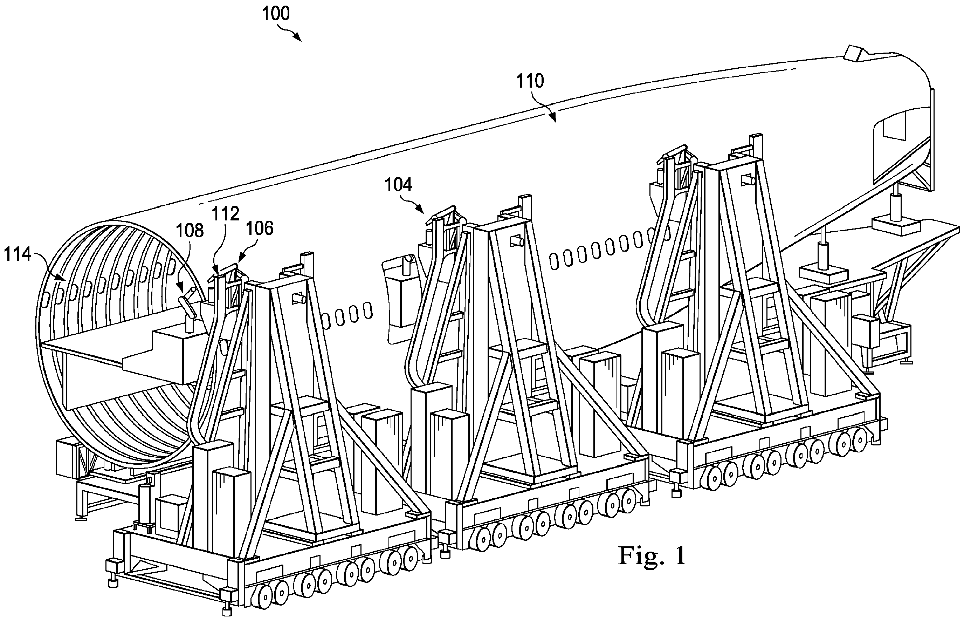

Referring now to the figures, **Figure 1** is an illustration of a perspective view of manufacturing environment **100** in accordance with an example embodiment. Within manufacturing environment **100**, fuselage assembly **102** is being built. In this illustrative example, plurality of assembly systems **104** is positioned relative to fuselage assembly **102.**

Assembly system **106** is an example of one of plurality of assembly systems **104.** Assembly system **106** includes robotic devices **108** positioned relative to exterior **110** of fuselage assembly **102** and robotic devices **112** positioned relative to interior **114** of fuselage assembly **102.** Robotic devices **108** and robotic devices **112** work together to perform fastener installation operations for the building of fuselage assembly **102.**

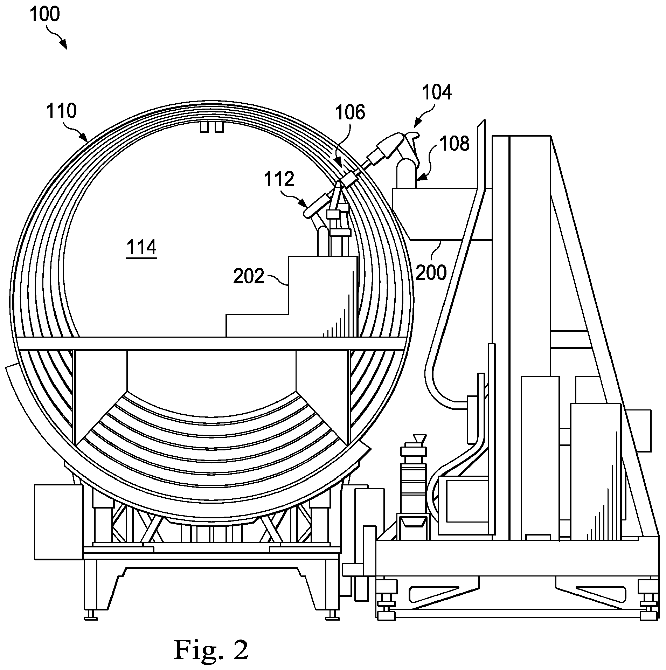

**Figure 2** is an illustration of an end view of fuselage assembly **102** being built in accordance with an example embodiment. As depicted, robotic devices **108** are supported by platform **200** and robotic devices **112** are supported by platform **202.** Robotic devices **108** and robotic devices **112** work together to install fasteners that join fuselage panels together to build fuselage assembly **102.**

In this illustrative example, robotic devices **108** are coupled with end effectors for performing drilling, inspection, and fastener insertion tasks. These end effectors are single function end effectors that may be switched out by being moved around relative to, for example, fastener installation point **113** to perform their individual tasks. A single function end effector is an end effector used to perform a single function per robotic device per fastener installation point. In some cases, robotic devices **108** are moved around on platform **200** in order to position the end effector for a particular task relative to fastener installation point **113.** In other cases, robotic devices **108** may remain stationary on platform **200** but may be used to move their end effectors around in order to position the proper end effector for a given task relative to fastener installation point **113.**

Each of robotic devices **112** is coupled with an end effector that is used to hold together the fuselage panels from the interior side of fuselage assembly **102** during the switching out of the single function end effectors coupled to robotic devices **108.** For example, after the end effector on one of robotic devices **108** has been used to perform its designated task, that end effector may be moved away from fastener installation point **113** to make room for a different end effector. An end effector coupled to one of robotic devices **112** is used to maintain the clamp-up of the fuselage panels from only the interior side of fuselage assembly **102**, while the end effectors are being switched around on the exterior side of fuselage assembly **102.**

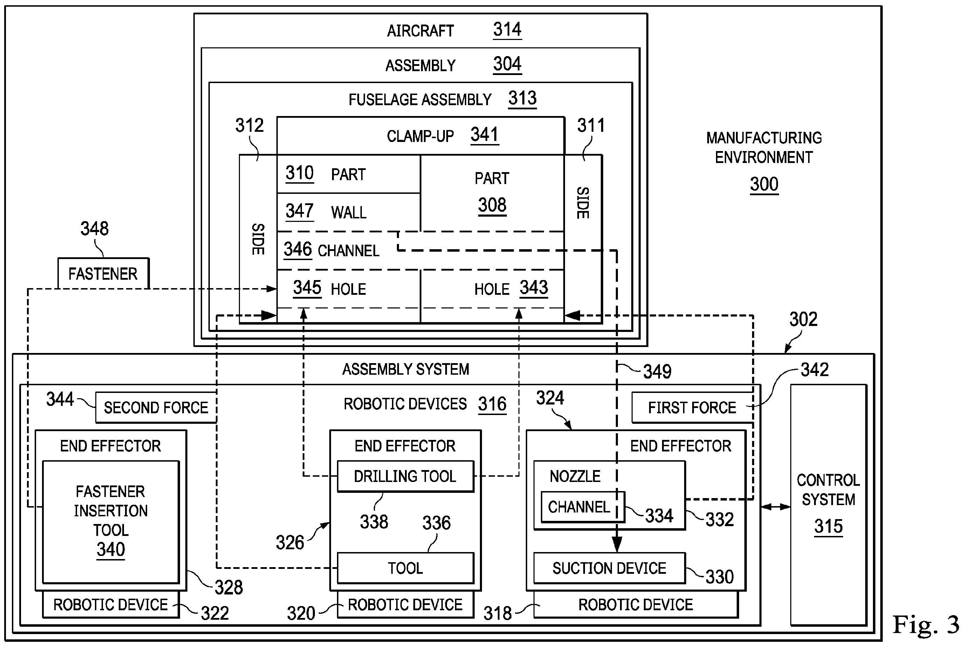

**Figure 3** is a block diagram of a manufacturing environment **300** in accordance with an example embodiment. Manufacturing environment **100** in **Figure 1** is an example of one implementation for manufacturing environment **300.** Within manufacturing environment **300**, assembly system **302** is used to build assembly **304.**

Assembly **304** includes part **308** and part **310.** Part **308** and part **310** are mated to form a joint (not shown) in assembly **304.** Side **311** of part **308**, which forms a first side of the joint, faces opposite part **310.** Side **312** of part **310**, which forms a second side of the joint, faces opposite part **308.**

Although assembly **304** is described as having only two parts in these example embodiments, in other cases, assembly **304** may include more than two parts. In one illustrative example, assembly **304** takes the form of fuselage assembly **313** of aircraft **314.** In one example, part **308** and part **310** take the form of fuselage panels. In other examples, part **308** and part **310** take the form of other types of aircraft parts, such as wing panels. When part **308** and part **310** take the form of panels, they together form a panel joint.

Assembly system **106** in **Figure 1** is an example of one implementation for assembly system **302.** Assembly system **302** includes control system **315** and plurality of robotic devices **316.** Control system **315** controls the operation of robotic devices **316.** Control system **315** is implemented using software, hardware, firmware, or a combination thereof.

When software is used, the operations performed by control system **315** may be implemented using, for example, without limitation, program code configured to run on a processor unit. When firmware is used, the operations performed by control system 315 may be implemented using, for example, without limitation, program code and data and stored in persistent memory to run on a processor unit.

When hardware is employed, the hardware may include one or more circuits that operate to perform the operations performed by control system 315. Depending on the implementation, the hardware may take the form of a circuit system, an integrated circuit, an application specific integrated circuit (ASIC), a programmable logic device, or some other suitable type of hardware device configured to perform any number of operations. A programmable logic device may be configured to perform certain operations. The device may be permanently configured to perform these operations or may be reconfigurable. A programmable logic device may take the form of, for example, without limitation, a programmable logic array, a programmable array logic, a field programmable logic array, a field programmable gate array, or some other type of programmable hardware device.

In these illustrative examples, control system **315** may be implemented using a computer system. The computer system may include a single computer or multiple computers in communication with each other.

Plurality of robotic devices **316** includes, for example, without limitation, robotic device **318**, robotic device **320**, and robotic device **322.** Robotic device **318**, robotic device **320**, and robotic device **322** are coupled with end effector **324**, end effector **326**, and end effector **328**, respectively. Each of these end effectors may be considered a single function end effector. In some illustrative examples, end effector **324**, end effector **326**, and end effector **328** are considered part of robotic device **318**, robotic device **320**, and robotic device **322**, respectively. In other illustrative examples, end effector **324**, end effector **326**, and end effector **328** are considered separate from but attachable to and detachable from robotic device **318**, robotic device **320**, and robotic device **322.**

In one example embodiment, end effector **324** includes suction device **330** and a tool, which may be nozzle **332**, coupled to suction device **330.** Nozzle **332** is directly or indirectly coupled to suction device **330.** In these illustrative examples, nozzle **332** may be an elongated member with channel **334** that extends through nozzle **332.** Suction device **330** generates suction that with sufficient power, suctions air into and through channel **334** within nozzle **332.**

End effector **326** includes tool **336** and drilling tool **338.** In some illustrative examples, tool **336** is a cylindrical member that surrounds drilling tool **338.** End effector **328** includes fastener insertion tool **340.**

To perform a fastener installation, end effector **324** and end effector **326** are positioned on opposite sides of assembly **304.** These end effectors are used to apply equal and opposite forces (*e.g*., first force **342** and second force **344** to part **308** and part **310**, respectively) to form clamp-up **341.** In particular, end effector **324** and end effector **326** are operated to apply equal and opposite forces to side **311** of part **308** and side **312** of part **310**, respectively, to form clamp-up **341.**

For example, at least one of robotic device **318** or end effector **324** is operated to apply first force **342** to side **311** of part **308** using nozzle **332.** First force **342** is a first mechanical force, which may also be referred to as a clamping force in some cases. In some cases, end effector **324** includes an extension system for moving nozzle **332** towards side **311** to apply first force **342** to part **308.** Further, at least one of robotic device **320** or end effector **326** may be operated to apply second force **344** to the other side of assembly **304** using tool **336.** Second force **344** is a second mechanical force, which may also be referred to as a clamping force in some cases. In some cases, end effector **326** includes an extension system for moving tool **336** towards side **312** to apply second force **344** to part **310.**

In one example, nozzle **332** and tool **336** are simultaneously extended towards and pressed against part **308** and part **310**, respectively, to apply first force **342** to part **308** and second force **344** to part **310.** Nozzle **332** and tool **336** are pressed against part **308** and part **310**, respectively, until the desired force static equilibrium is achieved between first force **342** and second force **344.** In other words, nozzle **332** and tool **336** are pressed or pushed against part **308** and part **310**, respectively, until first force **342** and second force **344**, which are equal and opposite forces, reach amounts sufficient to establish clamp-up **341** of part **308** and part **310.**

Once clamp-up **341** is achieved, nozzle **332** and tool **336** are held in fixed positions with respect to the reference coordinate system. Thus, clamp-up **341** is maintained in a fixed position relative to the reference coordinate system by the force static equilibrium created by the positioning of nozzle **332** and tool **336** with respect to the reference coordinate system.

In some illustrative examples, clamp-up **341** includes part **308,** part **310**, with both having sealant applied to the faying surfaces of these parts. In other words, the clamp-up may include the sealant sealing these parts together. This type of clamp-up **341** of part **308** and part **310** may be used for "one-up" assembly.

In some illustrative examples, drilling tool **338** is used to drill hole **343** through part **308** and hole **345** through part **310** while clamp-up **341** of these parts is maintained using suction **349.** Drilling tool **338** is positioned at side **312** such that the drilling of both hole **343** and hole **345** is performed from side **312.** In this manner, hole **345** is formed before hole **343.** In one or more examples, drilling tool **338** includes a suction device or some other type of cleanup device that is used to help remove part shavings or castoffs that are created during drilling.

Maintaining clamp-up **341** of these parts during drilling ensures that hole **343** and hole **345** are aligned during and after drilling to form fastener hole **346.** Further, maintaining clamp-up **341** of these parts during drilling may also help maintain clamp-up of a sealant (not shown) between part **308** and part **310;** prevent gaps between part **308** and part **310**; prevent drill filings, shavings, or castoffs from falling through or otherwise entering one or more gaps between part **308** and part **310**; reduce or eliminate a need to deburr edges of hole **343** and hole **345** after drilling; or a combination thereof.

Hole **343** in part **308** and hole **345** in part **310** are formed concentrically and coaxially. Fastener hole **346** may also be referred to as a channel or a through-hole. As used herein, a through-hole is a hole that passes through two or more parts and is thereby formed by the coaxial holes through these two or more parts.

Prior to installation of fastener **348** within fastener hole **346**, end effector **326** needs to be switched out for end effector **328** having fastener insertion tool **340.** But because tool **336** of end effector **326** is being used to maintain clamp-up **341**, a different mechanism for maintaining clamp-up **341** is needed before end effector **328** can be switched out. For example, movement of tool **336** away from part **310** or movement of nozzle **332** away from part **308**, without some additional mechanism for maintaining clamp-up **341**, could undo clamp-up **341.** Accordingly, a mechanism for maintaining clamp-up **341** while still allowing end effector **326** to be switched out with end effector **328** is needed.

Suction device **330** of end effector **324** is used to maintain clamp-up **341** from only side **311** to thereby allow end effector **326** at side **312** to be switched out with end effector **328.** In particular, suction device **330** generates suction **349** to suction air through fastener hole **346** from side **311.** Suctioning is performed while the force static equilibrium between first force **342** and second force **344** is maintained.

The volumetric flow rate of the suctioning is sufficient to pull part **310** towards part **308** to maintain clamp-up **341.** In particular, the volumetric flow rate is sufficient to provide a gripping force that grips wall **347** defining hole **345** to pull part **310** towards part **308.** In other illustrative examples, wall **347** may also be referred to as a hole wall. This suctioning is sufficient to independently maintain clamp-up **341** of part **308** and part **310** relative to each other.

By using the suctioning to grip wall **347** that defines hole **345** in part **310**, suction device **330** applies a suction force to part **310.** This suction force pulls part **310** towards part **308** and ultimately, towards end effector **324.** The positioning of nozzle **332** of end effector **324** relative to part **308** and with respect to the reference coordinate system creates a reactive force in response to the suction force. This reactive force is equal and opposite to the suction force.

Suctioning is performed until a desired force static equilibrium is reached between the suction force and the reactive force. Once the desired force static equilibrium is reached, suctioning can be used to independently maintain clamp-up **341** even when tool **336** is moved away from clamp-up **341.**

In this manner, suction device **330** produces suction **349** sufficient to hold part **308** and part **310** in place relative to each other even after second force **344** has been removed (*e.g*., when tool **336** is moved away and end effector **326** is switched out for another end effector). In other words, when tool **336** is moved away and out of contact with part **310,** such that second force **344** is removed, the suctioning of air through fastener hole **346** and into channel **334** of nozzle **332** maintains clamp-up **341** of part **308** and part **310.**

In one or more illustrative examples, control system **315** is used to control the operation of end effector **324,** end effector **326**, and end effector **328.** Control system **315** ensures that the desired force static equilibriums discussed above are established to thereby maintain clamp-up **341** and prevent any undesired shifting of part **308** relative to part **310** when end effector **326** for drilling is switched out with end effector **328** for fastener installation.

Specifically, end effector **326** with drilling tool **338** may be switched out with end effector **328** having fastener insertion tool **340.** Fastener insertion tool **340** is used to insert fastener **348** within fastener hole **346** while suction device **330** continues to suction air through fastener hole **346** from the opposite side **311** of assembly **304.** In this manner, assembly system **302** may allow installation of fastener **348** to be performed in a simple, easy, and efficient manner.

Suction device **330** provides a sufficient suction force that in combination with the reactive force provided by nozzle **332** maintains clamp-up **341** without requiring an additional force at side **312** of clamp-up **341.** In other words, suction device **330** and nozzle **332** together ensure that clamp-up **341** is independently maintained from a single side of clamp-up **341.**

Fastener **348** is installed while clamp-up **341** is maintained with suction **349.** In these illustrative examples, suctioning continues until fastener **348** is fully installed within fastener hole **346.** In some cases, fastener **348** is considered fully installed when a desired interference fit is formed between fastener **348** and fastener hole **346.** In other examples, fastener **348** is considered fully installed only after fastener **348** has been inserted within fastener hole **346** and fastener retaining hardware has been installed over fastener **348.** Fastener retaining hardware may include, for example, a collar, a nut, some other type of hardware, or a combination thereof. In other examples, fastener **348** may be considered fully installed after one or more other operations have been performed.

Once fastener **348** has been fully installed, suction **349** is no longer needed to maintain clamp-up. In other words, fastener **348** is used to maintain clamp-up **341** after suctioning has been stopped.

The illustration of manufacturing environment **100** in **Figure 1** is not meant to imply physical or architectural limitations to the manner in which an example embodiment may be implemented. Other components in addition to or in place of the ones illustrated may be used. Some components may be optional. Further, the blocks are presented to illustrate functional components. One or more of these blocks may be combined, divided, or combined and divided into different blocks when implemented in an example embodiment.

For example, in some cases, the drilling of fastener hole **346** may be part of a different process prior to part **308** and part **310** being brought together to form clamp-up **341.** For example, first hole **343** may be drilled into part **308** and hole **345** may be drilled into part **310** prior to these parts being clamped-up.

Part **308** and part **310** may then be positioned relative to each other. In these examples, part **308** and part **310** are positioned to align hole **343** and hole **345** at least one of concentrically or coaxially. Hole **343** and hole **345** may be sized such that when hole **343** and hole **345** are aligned together they form fastener hole **346.** In other examples, hole **343** and hole **345** may be determinate assembly (DA) holes. When hole **343** and hole **345** are determinate assembly holes and aligned coaxially, they form an index hole (not shown). Part **308** and part **310** may be temporarily mated using, for example, a temporary fastener installed through the index hole. The index hole may also be referred to as a reference hole, a guide hole, a tooling hole, or a through-hole.

In one or more examples, after the coaxial alignment of hole **343** and hole **345**, suction **349** is used to establish and maintain clamp-up **341** of part **308** and part **310.** This suctioning is formed at side **311** such that clamp-up **341** is a single-sided clamp-up. In some cases, when a temporary fastener is used to join part **308** and part **310**, suction **349** is applied simultaneously with the removal of the temporary fastener to thereby establish and maintain clamp-up **341.**

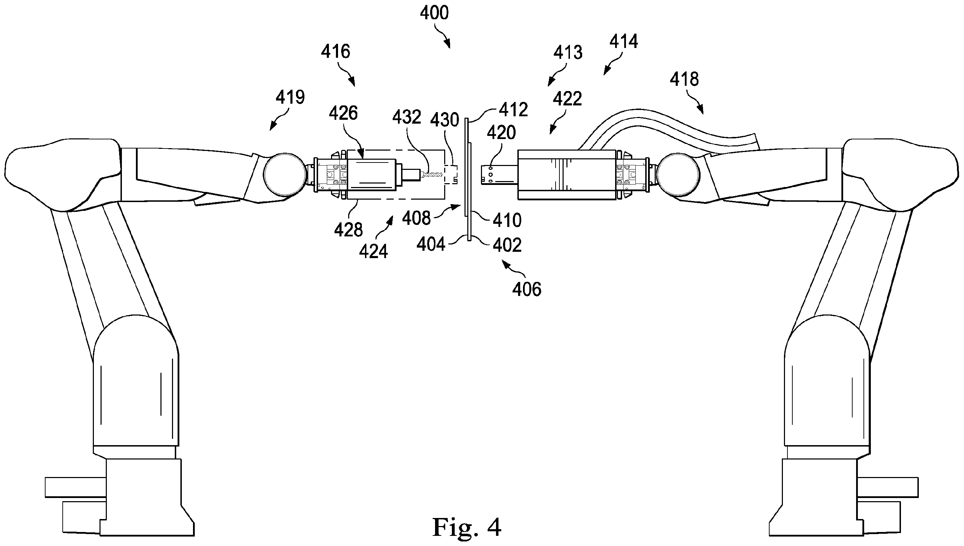

With reference to **Figures 4-15**, illustrations of an assembly system for performing a fastener installation operation are depicted in accordance with an example embodiment. In some illustrative examples, the assembly system may be referred to as a fastener installation system.

**Figure 4** is an illustration of an end view of single function end effectors positioned relative to a lap splice in accordance with an example embodiment. Lap splice **400** is an example of one implementation for assembly **304** in **Figure 3** or a panel joint in assembly **304.** In addition to lap splice **400,** the example embodiments may be also applicable to other types of splices not shown.

Lap splice **400** includes first part **402** and second part **404**, which may be examples of implementations for part **308** and part **310** of **Figure 3**, respectively. In other examples, lap splice **400** may include a third part (not shown) or some other number of parts. In one illustrative example, first part **402** and second part **404** take the form of fuselage panels. The size and scale of first part **402** and second part **404** in **Figures 4-15** is shown for illustrative purposes only. In other illustrative examples, the size of first part **402** and second part **404** may be smaller than or much larger than shown in **Figures 4-15****.**

Lap splice **400** has first side **406** and second side **408.** In this illustrative example, first side **406** is formed by surface **410** of first part **402** and second side **408** is formed by surface **412** of second part **404.** When first part **402** and second part **404** take the form of fuselage panels of a fuselage assembly, surface **410** of first part **402** may be facing an interior of the fuselage assembly and surface **412** of second part **404** may be facing an exterior of the fuselage assembly (the head of the fastener will be installed on the exterior surface, **412** when process completed).

In this illustrative example, assembly system **413** is positioned relative to assembly **409.** Assembly system **413** includes end effector **414**, end effector **416**, robotic device **418**, and robotic device **419.**

End effector **414** and end effector **416** are coupled to robotic device **418** and robotic device **419**, respectively. End effector **414** and end effector **416** may be examples of implementations for end effector **324** and end effector **326** of **Figure 3**, respectively. End effector **414** is positioned relative to first side **406** of lap splice **400** and end effector **416** is positioned relative to second side **408** of lap splice **400.**

End effector **414** and end effector **416** may be single function end effectors. End effector **414** includes at least nozzle **420** and suction device **422**, which are examples of implementations of nozzle **332** and suction device **330**, respectively, from **Figure 3****.** End effector **416** includes tool **424** and drilling tool **426.** Tool **424** is depicted as transparent in **Figure 4** for illustrative purposes only. Tool **424** and drilling tool **426** are examples of implementations of tool **336** and drilling tool **338,** respectively, from **Figure 3****.**

In this illustrative example, tool **424** includes element **428** and element **430.** Element **428** takes the form of, for example, without limitation, a first cylindrical member that surrounds drilling tool **426.** Element **430** takes the form of, for example, without limitation, a second cylindrical member having a smaller diameter than the first cylindrical member but sufficiently large to allow drill bit **432** of drilling tool **426** to pass through the second cylindrical member. In some illustrative examples, element **430** is sufficiently large to allow drill shavings or chips to be collected during drilling.

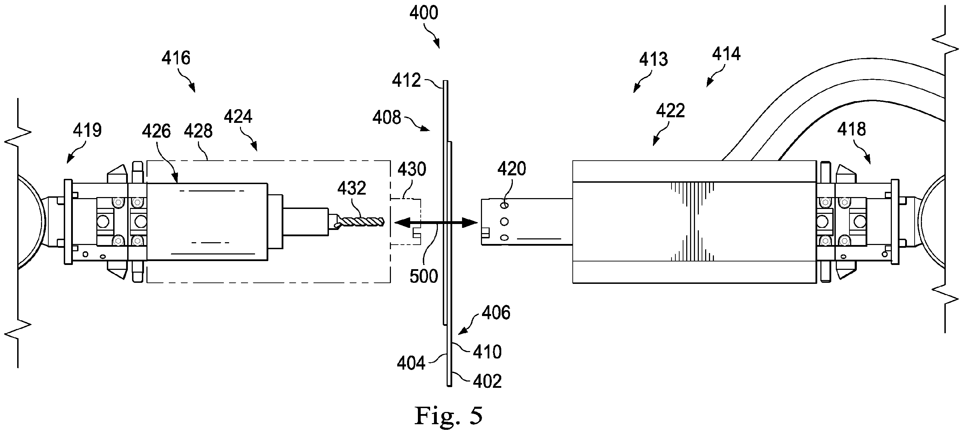

**Figure 5** is an illustration of an enlarged side view of end effector **414** and end effector **416** positioned relative to lap splice **400** in accordance with an example embodiment. In this illustrative example, end effector **414** and end effector **416** have been positioned in alignment with reference axis **500** through lap splice **400.** Reference axis **500** may be an axis substantially perpendicular to lap splice **400** that passes through lap splice **400** at the location at which a hole is to be drilled and a fastener is to be installed.

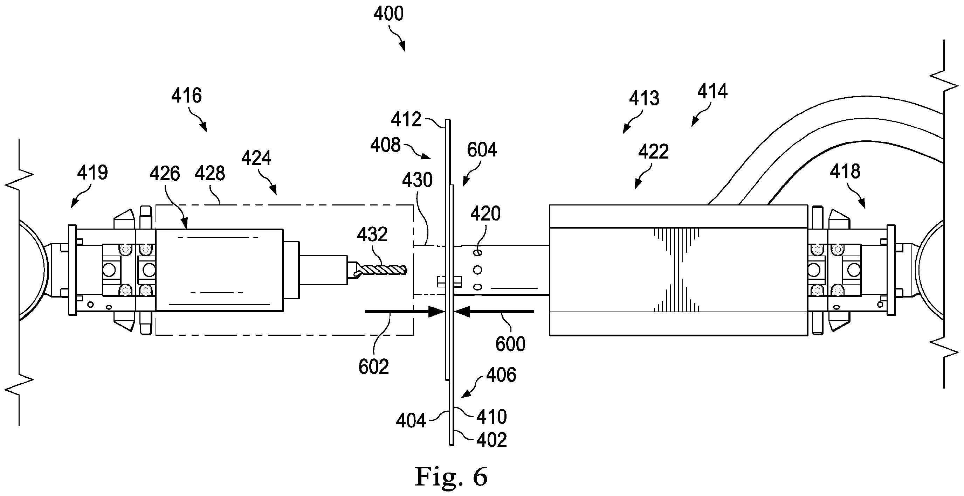

**Figure 6** is an illustration of a side view of end effector **414** and end effector **416** applying forces to lap splice **400** in accordance with an example embodiment. As depicted, at least one of end effector **414** or robotic device **418** has been used to move nozzle **420** into contact with first side **406** of lap splice **400.** Nozzle **420** is pushed against first side **406** to apply first force **600** to first side **406.** First force **600** is an example of first force **342** in **Figure 3****.** First force **600** is a mechanical force.

Similarly, at least one of end effector **416** or robotic device **419** has been used to move element **430** into contact with second side **408** of lap splice **400.** In particular, element **430** is pushed against second side **408** to apply second force **602** to second side **408.**

Nozzle **420** and element **430** are pushed against first part **402** and second part **404**, respectively, until a desired force static equilibrium is reached between first force **600** and second force **602** applied to lap splice **400.** Once this desired force static equilibrium has been reached, clamp-up **604** of first part **402** and second part **404** is achieved. In other words, first part **402** and second part **404** may be held in place such that each of these parts is held in a particular position relative to the other.

While nozzle **420** and element **430** are no longer pushed against first part **402** and second part **404**, respectively, they are kept fixed in the positions at which the desired force static equilibrium is achieved to maintain clamp-up **604.** In some cases, sealant may be present in between first part **402** and second part **404.**

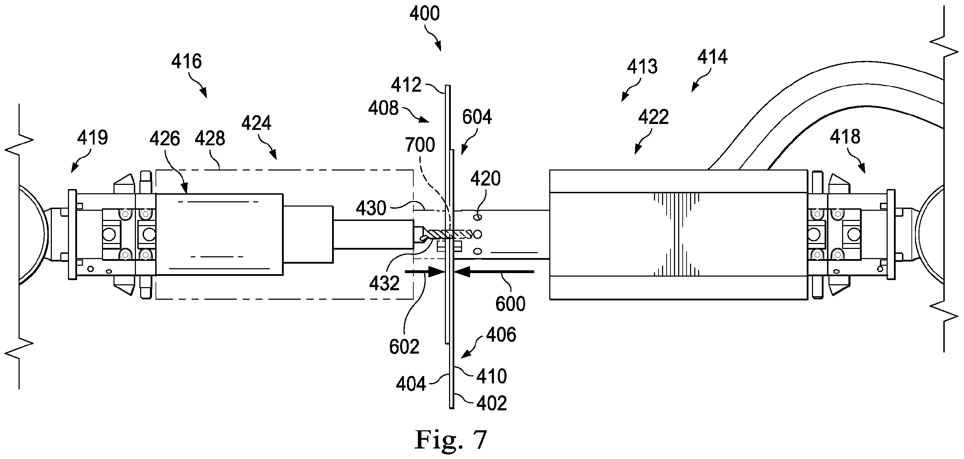

**Figure 7** is an illustration of a side view of a drilling operation in accordance with an example embodiment. Once clamp-up **604** of first part **402** and second part **404** has been established, drilling tool **426** of end effector **416** is operated to drill fastener hole **700** that extends through lap splice **400.** Fastener hole **700** may extend from second side **408** of second part **404** all the way through to first side **406** of first part **402.** In some cases, fastener hole **700** may be countersunk. Fastener **700** is an example of one implementation for fastener hole **346** in **Figure 3****.**

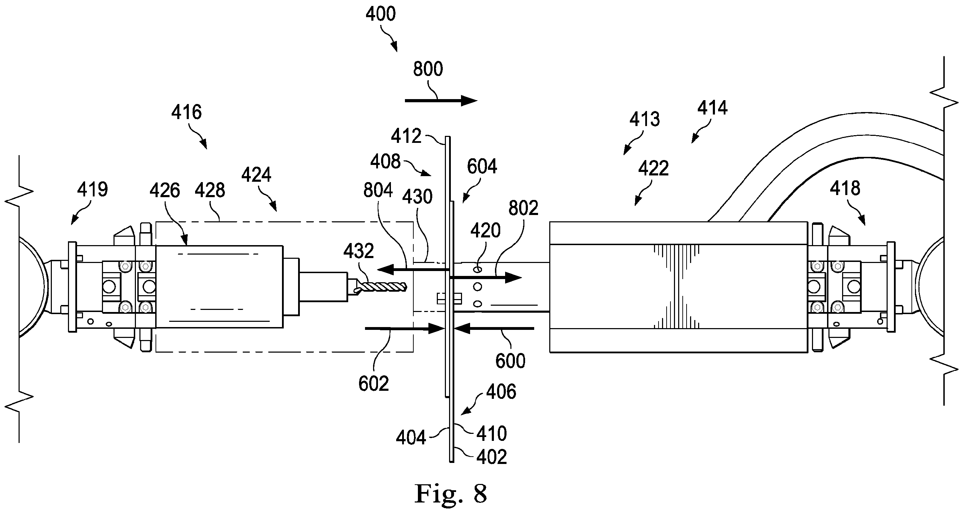

**Figure 8** is an illustration of a side view of a suctioning operation in accordance with an example embodiment. After fastener hole **700** has been drilled, drill bit **432** is moved away from second part **404.** For example, drill bit **432** may be retracted within element **428.**

Suction device **422** of end effector **414** is operated to suction air through fastener hole **700** from first side **406** of lap splice **400.** Air is suctioned through fastener hole **700** in the direction of arrow **800** from second side **408** of lap splice **400** towards first side **406** of lap splice **400.** The air is suctioned through fastener hole **700** and into nozzle **420.**

This suctioning creates a force, which may be suction force **802**, that is applied to second part **404.** Suction force **802** pulls second part **404** towards first part **402.** Reactive force **804** is created in response to suction force **802** by the positioning of nozzle **420** in contact with first part **402.** Suctioning is performed until the desired force static equilibrium is achieved between suction force **802** and reactive force **804.** For example, suction power may be increased until the desired force static equilibrium is achieved and sufficient suction power has been generated to allow clamp-up **604** to be maintained via suction independently of first force **600** and second force **602.**

In these illustrative examples, suction device **422** may be operated to continue to suction air through fastener hole **700** until the fastener installation operation has been completed. In some examples, each of element **430** and nozzle **420**, or both, may have at least one of a notch, a groove, a port, an opening, or some other type of vent for allowing air to pass in and out. This venting helps ensure that the suction power is not greater than desired. For example, element **430** may have one or more notches along the edge of element **430** that comes into contact with second part **404** to help make moving element **430** away from second part **404** while suctioning is ongoing easier.

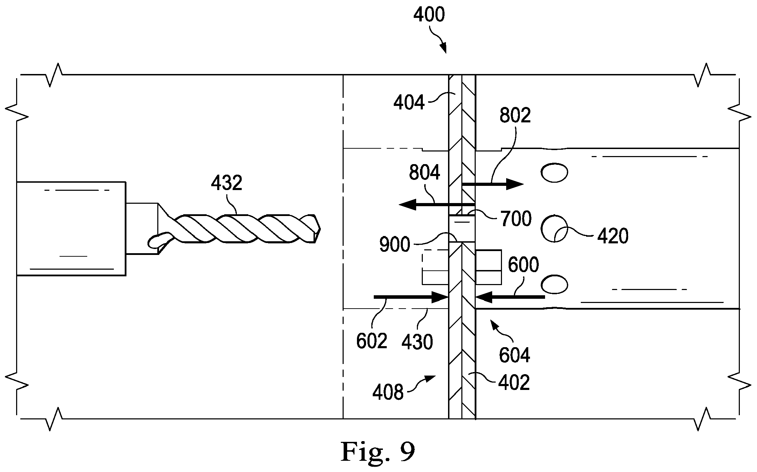

**Figure 9** is an illustration of an enlarged cross-sectional side view of first part **402** and second part **404** in accordance with an example embodiment. This view allows fastener hole **700** and wall **900** that defines the portion of fastener hole **700** formed within second part **404** to be more clearly seen. Wall **900** may also be referred to as a hole wall.

As depicted, suction force **802** may be a gripping force that grips wall **900** defining the portion of fastener hole **700** formed within second part **404** to thereby pull second part **404** towards first part **402**, and ultimately, towards nozzle **420.** Nozzle **420** applies reactive force **804** on first part **402.**

Together, suction force **802** and reactive force **804** may be used to independently maintain clamp-up **604** even after element **430** is moved away and out of contact with second part **404.** By allowing clamp-up **604** to be maintained independently of first force **600** and second force **602**, end effector **416** may be switched out with a different end effector. For example, at least one of end effector **416** or robotic device **419** may be operated to move element **430** of tool **424** away from lap splice **400.** Robotic device **419** may then be switched out with a different robotic device and a different effector may be positioned relative to lap splice **400.**

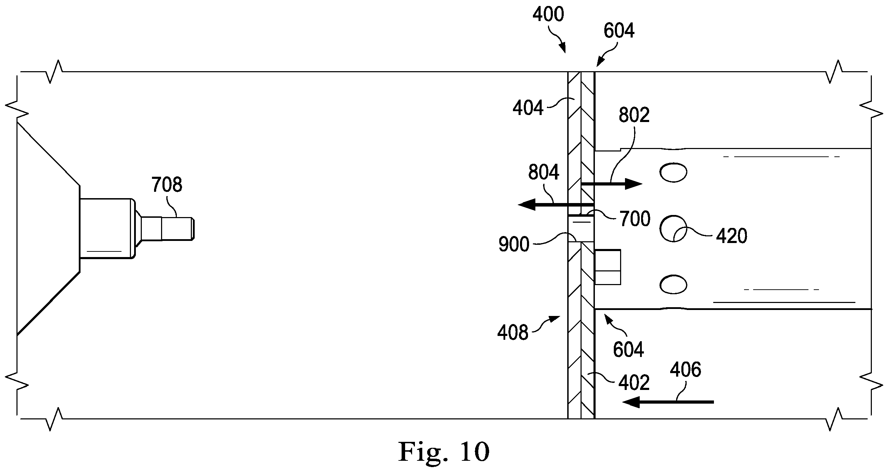

**Figure 10** is an illustration of an enlarged side view of a single-sided clamp-up in accordance with an example embodiment. As depicted, element **430** shown in the previous figures has been moved out of contact with first part **402.** But even without first force **600** and second force **602**, suction force **802** and reactive force **804** are able to independently maintain clamp-up.

Thus, single-sided clamp up is achieved. This type of single-sided clamp-up at first side **406** of lap splice **400** frees up the space around fastener hole **700** at second side **408** of lap splice **400** to allow for simpler and easier switching out of end effectors. No specialized tools are needed at second side **408** of lap splice **400** to maintain clamp-up **604.**

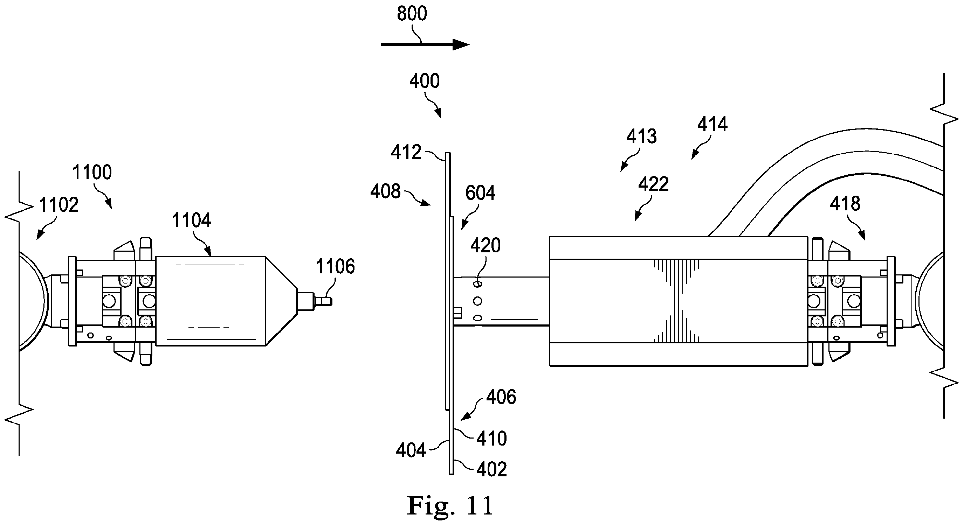

**Figure 11** is an illustration of another side view of the single-sided clamp-up from **Figure 10** in accordance with an example embodiment. As depicted, end effector **416** from **Figures 4-9** has been switched out with end effector **1100**, which is coupled to robotic device **1102.** End effector **1100** and robotic device **1102** are part of assembly system **413.**

In this illustrative example, robotic device **419** with end effector **416** is moved to allow robotic device **1102** with end effector **1100** to be positioned relative to second side **408** of lap splice **400.** In other illustrative examples, end effector **416** may be swapped with end effector **1100** and end effector **1100** then coupled to robotic device **419.** As depicted, the switching of end effectors occurs after fastener hole **700** has been drilled through lap splice **400** and single-sided clamp-up has been achieved.

In this illustrative example, end effector **1100** includes fastener insertion tool **1104.** At least one of end effector **1100** or robotic device **1102** may be used to move and position fastener insertion tool **1104** relative to fastener hole **700** that has been drilled through lap splice **400.** Fastener insertion tool **1104** is used to insert fastener **1106** into fastener hole **700.** In one or more examples, fastener insertion tool **1104** installs fastener **1106** by forming a desired interference fit between fastener **1106** and fastener hole **700.**

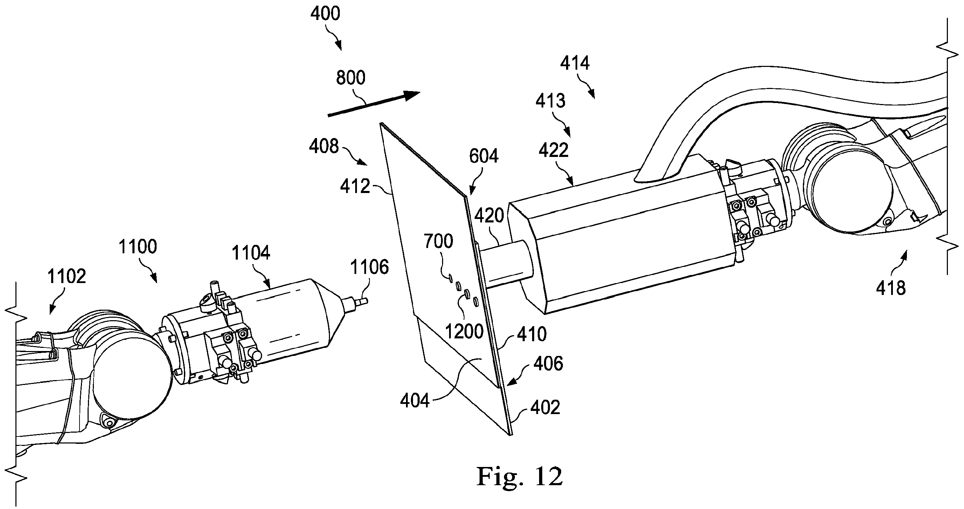

**Figure 12** is an illustration of a perspective view of end effector **1100** positioned relative to second side **408** of lap splice **400** in accordance with an example embodiment. As depicted, fastener hole **700** is one of a plurality of fastener holes through lap splice **400** in which fasteners **1200** have been installed.

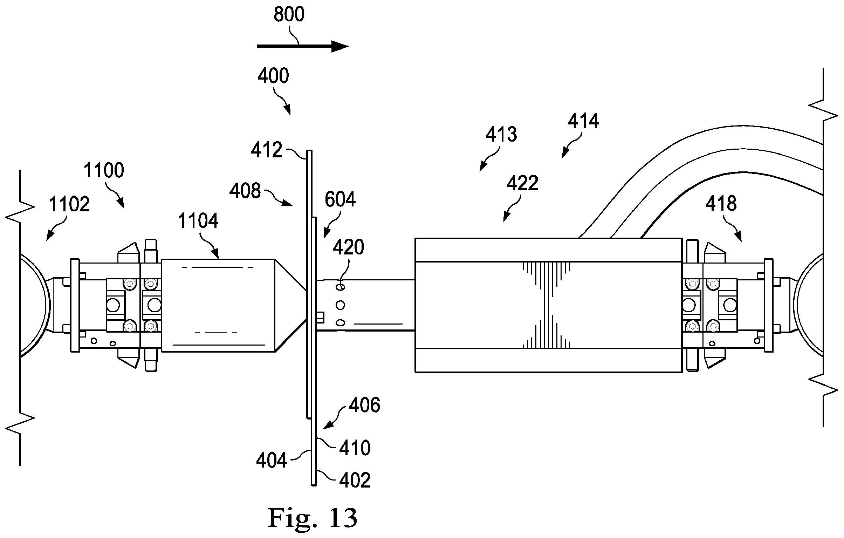

**Figure 13** is an illustration of a side view of fastener insertion tool **1104** being used to insert fastener **1106** (shown in **Figures 11** and **12**) into fastener hole **700** (shown in **Figure 11**) in accordance with an example embodiment. Fastener insertion tool **1104** inserts fastener **1106** into fastener hole **700** while suction device **422** continues to suction air through fastener hole **700.**

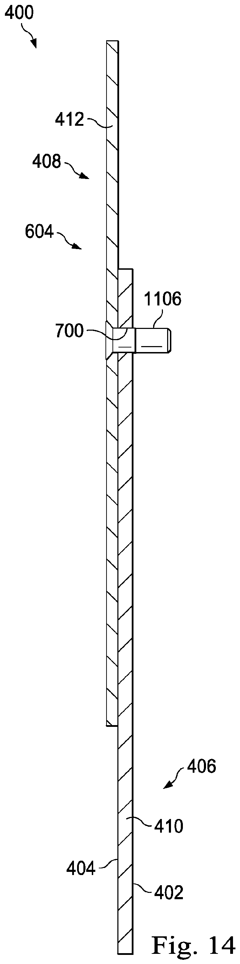

**Figure 14** is an illustration of a cross-sectional view of the installed fastener **1106** in lap splice **400** in accordance with an example embodiment. In this particular illustrative example, fastener **1106** is a countersunk fastener and fastener hole **700** is a countersunk hole.

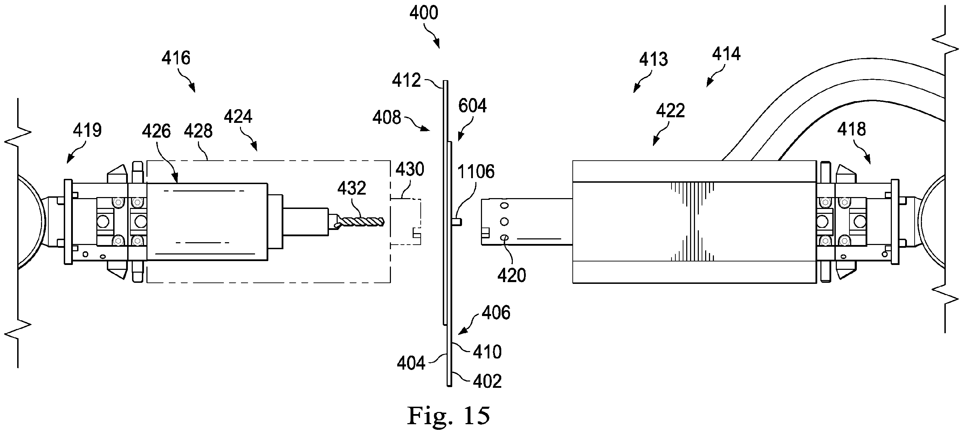

**Figure 15** is an illustration of a completion of the fastener installation operation in accordance with an example embodiment. As depicted, fastener **1106** has been installed in lap splice **400.** Once fastener **1106** has been installed, suctioning is no longer needed to maintain clamp-up **504** from the previous figures. Fastener **1106** is capable of independently maintaining clamp-up **604** with respect to the portion of lap splice **400** in which fastener **1106** is installed.

In one or more illustrative examples, installation of fastener **1106** is completed once a desired interference fit has been formed between fastener **1106** and fastener hole **700.** Once this interference fit has been formed, suctioning is discontinued. In other illustrative examples, fastener **1106** is considered fully installed when fastener retaining hardware is installed over fastener **1106.** Suctioning continues until all the operations required to complete installation of fastener **1106** have been completed to ensure that the fastener installation meets requirements.

After fastener **1106** is fully installed, end effector **414** may be moved away from lap splice **400** and repositioned relative to a next location on lap splice **400** at which a fastener is to be installed. Further, end effector **1100** from **Figures 11-13** may be switched out with end effector **416** and end effector **416** may be repositioned relative to the next location on lap splice **400** at which the new fastener is to be installed.

The illustrations of end effectors, tools, devices, and other components in **Figures 4-15** are not meant to imply physical or architectural limitations to the manner in which an example embodiment may be implemented. Other components in addition to or in place of the ones illustrated may be used. Some components may be optional. The different components shown in **Figures 4-15** may be illustrative examples of how components shown in block form in **Figure 3** can be implemented as physical structures. Additionally, some of the components in **Figures 4-15** may be combined with components in **Figure 3**, used with components in **Figure 3**, or a combination of the two.

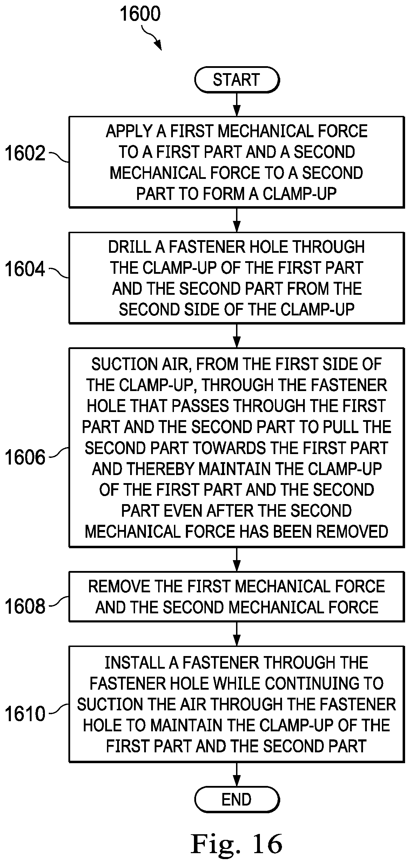

**Figure 16** is a flowchart of a method for performing a fastener installation in accordance with an example embodiment. Process **1600** illustrated in **Figure 16** may be implemented using assembly system **302** from **Figure 3** or assembly system **413** from **Figures 4-15****.**

The process may begin by applying a first mechanical force to a first part and a second mechanical force to a second part to form a clamp-up of the first part and the second part (operation **1602**). The assembly includes a first part and a second part positioned in contact with each other. The first part forms the first side of the clamp-up and the second part forms the second side of the clamp-up.

Optionally, a fastener hole is drilled through the clamp-up of the first part and the second part from the second side of the clamp-up (operation **1604**). The fastener hole extends from the second side to the first side of the assembly. The fastener hole may be formed by a first hole drilled through the first part and a second hole drilled through the second part. In these illustrative examples, the first hole and the second hole are coaxial.

Air is suctioned, from the first side of the clamp-up, through the fastener hole that passes through the first part and the second part to pull the second part towards the first part and thereby maintain the clamp-up of the first part and the second part even after the second mechanical force has been removed (operation **1606**). In other words, the suctioning of the air through the fastener hole maintains the "clamp-up" of the first part and the second part without requiring use of the second mechanical force at the second side of the clamp-up.

In particular, in operation **1606**, suctioning is performed at a volumetric flow rate sufficient to maintain the clamp-up from just the first side of the clamp-up without requiring use of additional force at the second side of the clamp-up. Air is suctioned through the fastener hole to grip a wall of the second hole in the second part and thereby pull the second part towards the first part.

In these examples, air is suctioned from the first side of the clamp-up through the fastener hole in a direction towards the first part and at a volumetric flow rate sufficient to maintain a gripping of the wall of the second hole while overcoming a volume of suction lost at the second side of the clamp-up. For example, some volume of suction or suction force may be lost due to an open end of the fastener hole at the second side.

In some examples, depending on the implementation, operation **1606** may be begun after operation **1604** has been completed or during operation **1604.** In other words, suctioning may be performed only after the fastener hole has been drilled or while the fastener hole is being drilled.

The first mechanical force and the second mechanical force are removed (operation **1608**). Operation **1608** includes, for example, switching out the end effector that performed the drilling of operation **1604** with a new end effector. The suctioning performed in operation **1606** continues in order to maintain the clamp-up of the first part and the second part during the switching out of the end effectors.

Thereafter, a fastener is installed within the fastener hole while continuing to suction the air through the fastener hole to maintain the clamp-up of the first part and the second part (operation **1610**). In one or more illustrative examples, operation **1610** includes inserting the fastener into the fastener hole and forming a desired interference fit. In other illustrative examples, operation **1610** includes inserting the fastener into the fastener hole and installing fastener retaining hardware around the elongate portion of the fastener extending through the fastener hole.

Continuing to perform the suctioning of air in operation **1606** while operation 1610 is performed ensures that the clamp-up of the first part and the second part is maintained throughout the insertion of the fastener. The suctioning of the air through the hole may be continued until the entire fastener installation operation is completed. For example, suctioning may be continued to maintain the clamp-up until a desired interference fit is formed between the fastener and the fastener hole.

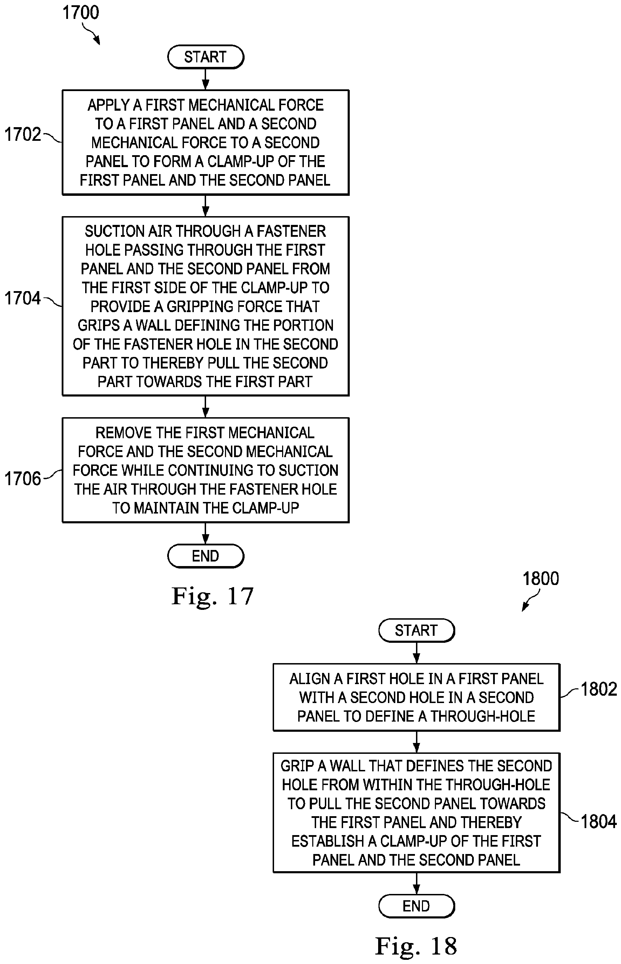

**Figure 17** is a flowchart of a process for maintaining a clamp-up in accordance with an example embodiment. Process **1700** illustrated in **Figure 17** may be performed using, for example, assembly system **302** from **Figure 3** or assembly system **413** from **Figures 4-15****.**

Process **1700** may begin by applying a first mechanical force to a first panel and a second mechanical force to a second panel to form a clamp-up of the first panel and the second panel (operation **1702**). The first panel and the second panel are fuselage panels.

Operation **1702** may be performed by applying the first force using a tool coupled to a first end effector, such as end effector **414** in **Figure 4****.** The tool may be, for example, a nozzle, such as nozzle **420** in **Figure 4****.** However, in other illustrative examples, the tool may be some other type of member, element, or structural component. The second force is applied using a tool coupled to a second end effector, such as end effector **416** in **Figure 4****.**

Air is suctioned through a fastener hole passing through the first panel and the second panel from the first side of the clamp-up to provide a gripping force that grips a wall defining the portion of the fastener hole in the second part to thereby pull the second part towards the first part (operation **1704**). In operation **1704**, a partial vacuum is drawn through the fastener hole and through the nozzle positioned relative to the first panel at the first side of the clamp-up to maintain the clamp-up.

In some illustrative examples, the fastener hole may be drilled as part of the process **1700.** For example, the hole may be drilled between the performing of operations **1702** and **1704.** In other illustrative examples, the drilling of the fastener hole is part of a different process or is performed prior to process **1700.** For example, a first hole may be drilled into the first panel and a second hole may be drilled into the second panel prior to these panels being "clamped-up." The first panel and the second panel may then be positioned relative to each other such that the holes are aligned to form a single coaxial fastener hole prior to operation **1702.** Afterwards, operation **1702** may be performed to initiate process **1700.**

With reference again to operation **1704**, the suctioning of the air is performed with sufficient suction power (*e.g.,* a sufficient volumetric flow rate) to maintain the clamp-up of the first panel and the second panel without requiring the second mechanical force. The suctioning maintains the clamp-up when the gripping force provided by the suctioning is opposite and equal to the first mechanical force being applied. As the second panel is pulled towards the first panel, the first mechanical force causes the first panel to exert an equal reactive force on the second panel to thereby maintain the clamp-up.

Thereafter, the second mechanical force is removed while continuing to suction the air through the fastener to maintain the clamp-up (operation **1706**). In some illustrative examples, process **1700** terminates. In other illustrative examples, process **1700** includes installing a fastener through the fastener hole from the second side of the clamp-up while continuing to suction the air through the fastener hole from the first side to maintain the clamp-up during fastener installation.

**Figure 18** is a flowchart of a process for establishing a clamp-up in accordance with an example embodiment. Process **1800** illustrated in **Figure 18** may be performed using, for example, assembly system **302** from **Figure 3** or assembly system **413** from **Figures 4-15****.**

Process **1800** begins by aligning a first hole in a first panel with a second hole in a second panel to define a through-hole (operation **1802**). In these illustrative examples, operation **1802** is performed to at least one of concentrically or coaxially align the first hole and the second hole to define the through-hole. As one illustrative example, the first panel and the second panel are positioned relative to each other to coaxially align the first hole with the second hole.

In some examples, the through-hole takes the form of a fastener hole, such as fastener hole **346** in **Figure 3****.** In other examples, the through-hole takes the form of an index hole. For example, the first hole and the second hole that are aligned in operation **1802** may be determinate assembly holes. The first and second holes may be coaxially aligned in operation **1802** to form an index hole. In one or more illustrative examples, the first panel and the second panel in operation **1802** may be fuselage panels, wing panels, or some other type of panels.

In still other illustrative examples, aligning the first hole in the first panel with the second hole in the second panel in operation **1802** comprises drilling the first hole in the first panel and drilling the second hole in the second panel in a manner that coaxially aligns these two holes and forms a through-hole through the first panel and the second panel.

Thereafter, a hole-wall that defines the second hole is gripped from within the through-hole to pull the second panel towards the first panel and thereby establish a clamp-up of the first panel and the second panel (operation **1804**). The clamp-up established in operation **1804** is a single-sided clamp-up. Operation **1804** may be performed using, for example, suction to grip the wall of the second hole. Air is suctioned through the through-hole such that the suctioning force provides a gripping force to grip the wall of the second hole. In particular, a partial vacuum is drawn through the through-hole to thereby provide a gripping force that grips the wall of the second hole. The partial vacuum is created despite the outward-facing end of the second hole being an open end.

The clamp-up formed in operation **1804** may be maintained until one or more operations are performed with respect to the through-hole. For example, the clamp-up may be maintained until either a temporary fastener has been installed to maintain clamp-up or a drilling operation has been performed to enlarge the through-hole to form a fastener hole. In some cases, the clamp-up is maintained until a fastener installation operation has been performed to install a fastener within the through-hole, wherein the hole diameter is within tolerance for a fastener installation. In some cases, the clamp-up may be maintained until a drilling operation and a fastener installation operation have been performed. In still other examples, the clamp-up is maintained until a fastener installation operation has been performed that includes insertion of the fastener through the through-hole and the securing of a nut or collar onto the fastener.

The single-sided clamp-up allows various tools and devices to be moved around relative to the location of the through-hole from the opposite side from where the partial vacuum is being drawn. The single-sided clamp-up improves the efficiency of assembly processes.

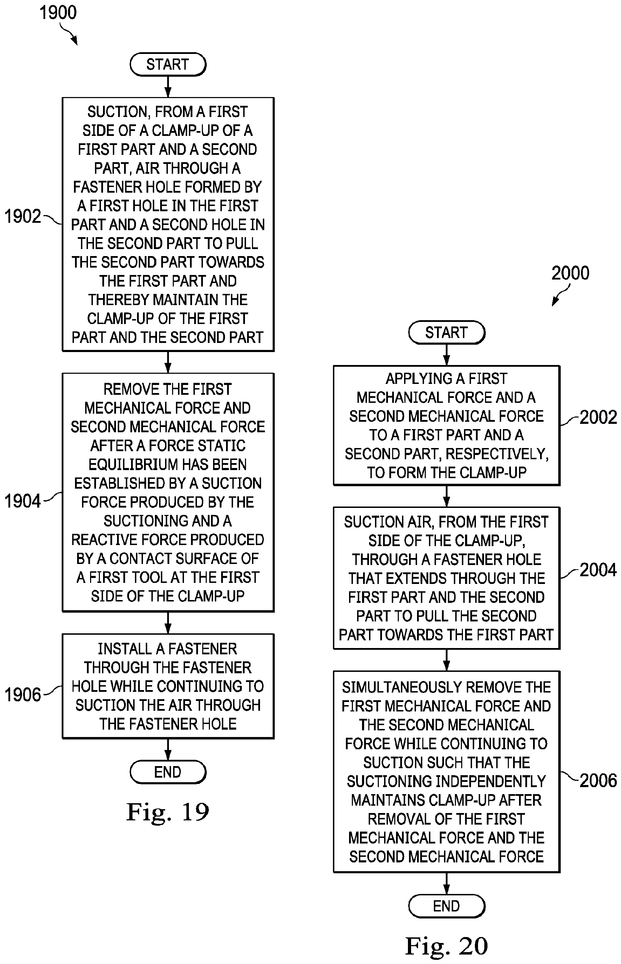

**Figure 19** is a flowchart of a process for maintaining a single-sided clamp-up in accordance with an example embodiment. Process **1900** illustrated in **Figure 19** may be performed using, for example, assembly system **302** from **Figure 3** or assembly system **413** from **Figures 4-15****.** In particular, process **1900** may be performed using end effector **324** in **Figure 3** or end effector **414** in **Figures 4-15****.**

Process **1900** includes suctioning, from a first side of a clamp-up of a first part and a second part, air through a fastener hole formed by a first hole in the first part and a second hole in the second part to pull the second part towards the first part and thereby maintain the clamp-up of the first part and the second part (operation **1902**). In one or more illustrative examples, operation **1902** includes suctioning, from the first side of the clamp-up, the air through the fastener hole to grip a wall that defines the second hole in the second part to thereby pull the second part towards the first part.

Optionally, process **1900** also includes removing the first mechanical force and second mechanical force after a force static equilibrium has been established by a suction force produced by the suctioning and a reactive force produced by a contact surface of a first tool at the first side of the clamp-up (operation **1904**), with the process terminating thereafter. The first mechanical force may have been applied by the first tool at the fist side of the clamp-up. The second mechanical force may have been applied by a second tool at a second side of the clamp-up during the suctioning.

The suction force and the reactive force maintain the clamp-up of the first part and the second part without the first mechanical force and the second mechanical force. In these illustrative examples, the first mechanical force and the second mechanical force are applied at least until the force static equilibrium is established by the suction force produced by the suctioning and the reactive force produced by the contact surface of the first tool at the first side of the clamp-up.

Optionally, process **1900** further includes installing a fastener through the fastener hole while continuing to suction the air through the fastener hole (operation **1906**). In operation **1906,** the suctioning may be performed at least until the fastener is fully installed.

**Figure 20** is a flowchart of a process for maintaining a single-sided clamp-up in accordance with an example embodiment. Process **2000** illustrated in **Figure 20** may be performed using, for example, assembly system **302** from **Figure 3** or assembly system **413** from **Figures 4-15****.**

Process **2000** begins by applying a first mechanical force and a second mechanical force to a first part and a second part, respectively, to form the clamp-up (operation **2002**). The first part forms a first side of the clamp-up and the second part forms a second side of the clamp-up. Next, air is suctioned, from the first side of the clamp-up, through a fastener hole that extends through the first part and the second part to pull the second part towards the first part (operation **2004**). The first mechanical force and the second mechanical force are removed simultaneously while continuing to suction such that the suctioning independently maintains clamp-up after removal of the first mechanical force and the second mechanical force (operation **2006**), with the process terminating thereafter.

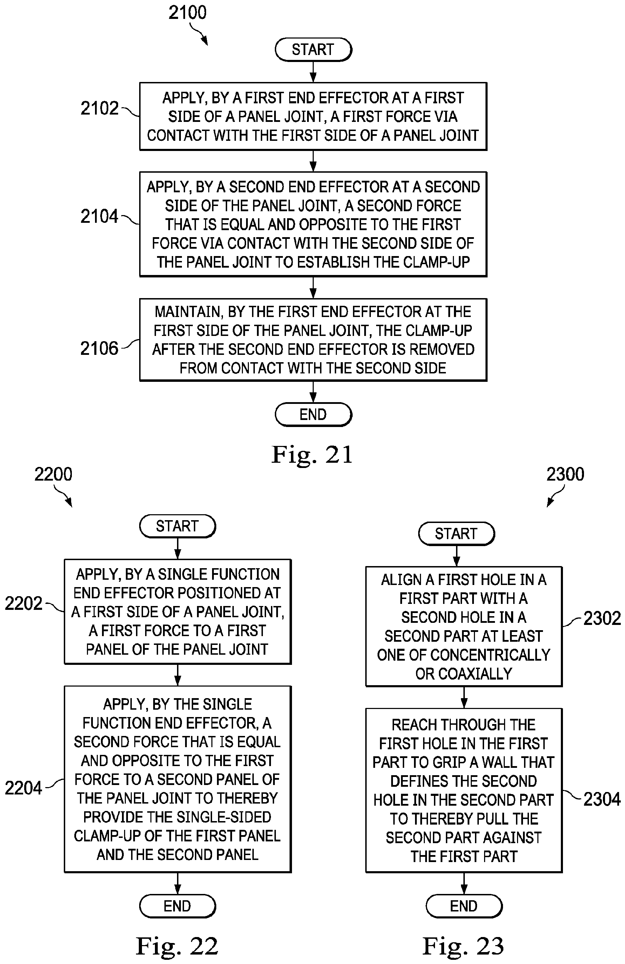

**Figure 21** is a flowchart of a process for maintaining a single-sided clamp-up in accordance with an example embodiment. Process **2100** illustrated in **Figure 21** may be performed using, for example, assembly system **302** from **Figure 3** or assembly system **413** from **Figures 4-15****.**

Process **2100** includes applying, by a first end effector at a first side of a panel joint, a first force via contact with the first side of a panel joint (operation **2102**). Process **2100** includes applying, by a second end effector at a second side of the panel joint, a second force that is equal and opposite to the first force via contact with the second side of the panel joint to establish the clamp-up (operation **2104**). Further, process **2100** includes maintaining, by the first end effector at the first side of the panel joint, the clamp-up after the second end effector is removed from contact with the second side (operation **2106**), with the process terminating thereafter.

**Figure 22** is a flowchart of a process for maintaining a single-sided clamp-up in accordance with an example embodiment. Process **2200** illustrated in **Figure 22** may be performed using, for example, assembly system **302** from **Figure 3** or assembly system **413** from **Figures 4-15****.**

Process **2200** includes applying, by a single function end effector positioned at a first side of a panel joint, a first force to a first panel of the panel joint (operation **2202**). Process **2200** further includes applying, by the single function end effector, a second force that is equal and opposite to the first force to a second panel of the panel joint to thereby provide the single-sided clamp-up of the first panel and the second panel (operation **2204**), with the process terminating thereafter.

In some illustrative examples, one or more operations may be performed prior to operation **2202.** For example, in some cases, holes are created in the first panel and the second panel prior to operation **2202.** These holes may be formed via drilling, punching through the panels, or by some other hole-making operation. These holes may be drilled while an initial clamp-up of the panels has been established such that holes are aligned at least one of concentrically or coaxially to form a through-hole (fastener hole). In other illustrative examples, determinate assembly holes may be formed in the panels individually and then the panels later brought together to align the holes.

**Figure 23** is a flowchart of a process for providing a single-sided clamp-up in accordance with an example embodiment. Process **2300** illustrated in **Figure 23** may be performed using a single function end effector, such as end effector **324** in **Figure 3** or end effector **414** described in **Figures 4-15****.**

Process **2300** includes, optionally, aligning a first hole in a first part with a second hole in a second part at least one of concentrically or coaxially (operation **2302**). In some examples, operation **2302** includes drilling through a clamp-up formed by the first part and the second part to form the first hole and the second hole that are at least one of concentrically or coaxially aligned. In one or more illustrative examples, operation **2302** includes simply aligning the first part already having the first hole with the second part already having the second hole (e.g. determinate assembly holes) to thereby align the first hole and the second hole.

Next, process **2300** includes reaching through the first hole in the first part to grip a wall that defines the second hole in the second part to thereby pull the second part against the first part (operation **2304**), with the process terminating thereafter. In some examples, operation **2304** includes creating a pressure differential that acts on the wall of the second hole in the second part to pull the second part against the first part. In one or more examples, operation **2304** includes suctioning, by a suction device positioned relative to the first part, air through the first hole and the second hole to pull the second part towards the first part.

In this manner, process **2300** provides a method for establishing and maintaining a clamp-up. In particular, a single-sided clamp-up is provided.

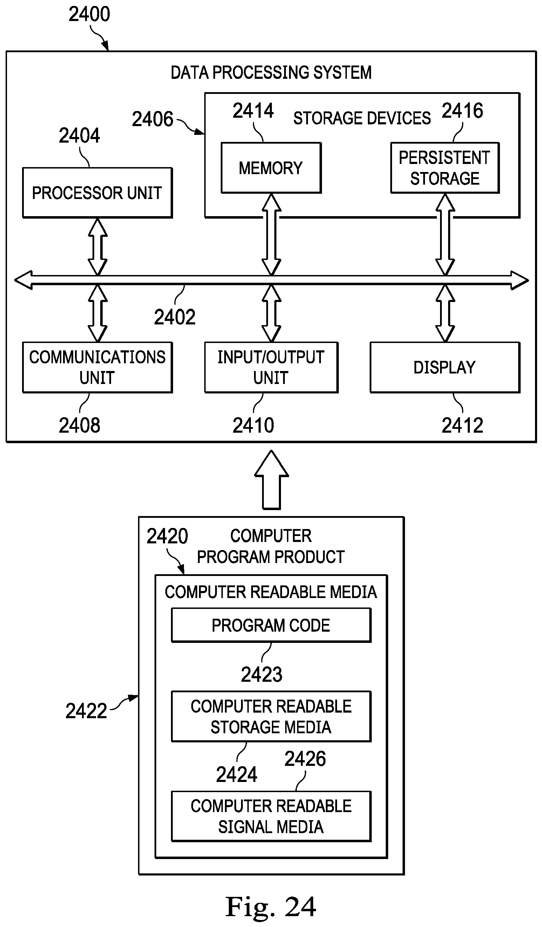

Turning now to **Figure 24**, an illustration of a data processing system in the form of a block diagram is depicted in accordance with an example embodiment. Data processing system **2400** may be used to implement control system **315** in **Figure 3****.** As depicted, data processing system **2400** includes communications framework **2402**, which provides communications between processor unit **2404**, storage devices **2406**, communications unit **2408**, input/output unit **2410**, and display **2412.** In some cases, communications framework **2402** may be implemented as a bus system.

Processor unit **2404** is configured to execute instructions for software to perform a number of operations. Processor unit **2404** may comprise a number of processors, a multi-processor core, and/or some other type of processor, depending on the implementation. In some cases, processor unit **2404** may take the form of a hardware unit, such as a circuit system, an application specific integrated circuit (ASIC), a programmable logic device, or some other suitable type of hardware unit.

Instructions for the operating system, applications, and/or programs run by processor unit **2404** may be located in storage devices **2406.** Storage devices **2406** may be in communication with processor unit **2404** through communications framework **2402.** As used herein, a storage device, also referred to as a computer readable storage device, is any piece of hardware capable of storing information on a temporary and/or permanent basis. This information may include, but is not limited to, data, program code, and/or other information.

Memory **2414** and persistent storage **2416** are examples of storage devices **2406.** Memory **2414** may take the form of, for example, a random-access memory or some type of volatile or non-volatile storage device. Persistent storage **2416** may comprise any number of components or devices. For example, persistent storage **2416** may comprise a hard drive, a flash memory, a rewritable optical disk, a rewritable magnetic tape, or some combination of the above. The media used by persistent storage **2416** may or may not be removable.

Communications unit **2408** allows data processing system **2400** to communicate with other data processing systems and/or devices. Communications unit **2408** may provide communications using physical and/or wireless communications links.

Input/output unit **2410** allows input to be received from and output to be sent to other devices connected to data processing system **2400.** For example, input/output unit **2410** may allow user input to be received through a keyboard, a mouse, and/or some other type of input device. As another example, input/output unit **2410** may allow output to be sent to a printer connected to data processing system **2400.**

Display **2412** is configured to display information to a user. Display **2412** may comprise, for example, without limitation, a monitor, a touch screen, a laser display, a holographic display, a virtual display device, and/or some other type of display device.

In this illustrative example, the processes of the different example embodiments may be performed by processor unit **2404** using computer-implemented instructions. These instructions may be referred to as program code, computer usable program code, or computer readable program code and may be read and executed by one or more processors in processor unit **2404.**

In these examples, program code **2418** is located in a functional form on computer readable media **2420**, which is selectively removable, and may be loaded onto or transferred to data processing system **2400** for execution by processor unit **2404.** Program code **2418** and computer readable media **2420** together form computer program product **2422.** In this illustrative example, computer readable media **2420** may be computer readable storage media **2424** or computer readable signal media **2426.**

Computer readable storage media **2424** is a physical or tangible storage device used to store program code **2418** rather than a medium that propagates or transmits program code **2418.** Computer readable storage media **2424** may be, for example, without limitation, an optical or magnetic disk or a persistent storage device that is connected to data processing system **2400.**

Alternatively, program code **2418** may be transferred to data processing system **2400** using computer readable signal media **2426.** Computer readable signal media **2426** may be, for example, a propagated data signal containing program code **2418.** This data signal may be an electromagnetic signal, an optical signal, and/or some other type of signal that can be transmitted over physical and/or wireless communications links.

The illustration of data processing system **2400** in **Figure 24** is not meant to provide architectural limitations to the manner in which the example embodiments may be implemented. The different example embodiments may be implemented in a data processing system that includes components in addition to or in place of those illustrated for data processing system **2400.** Further, components shown in **Figure 24** may be varied from the illustrative examples shown.

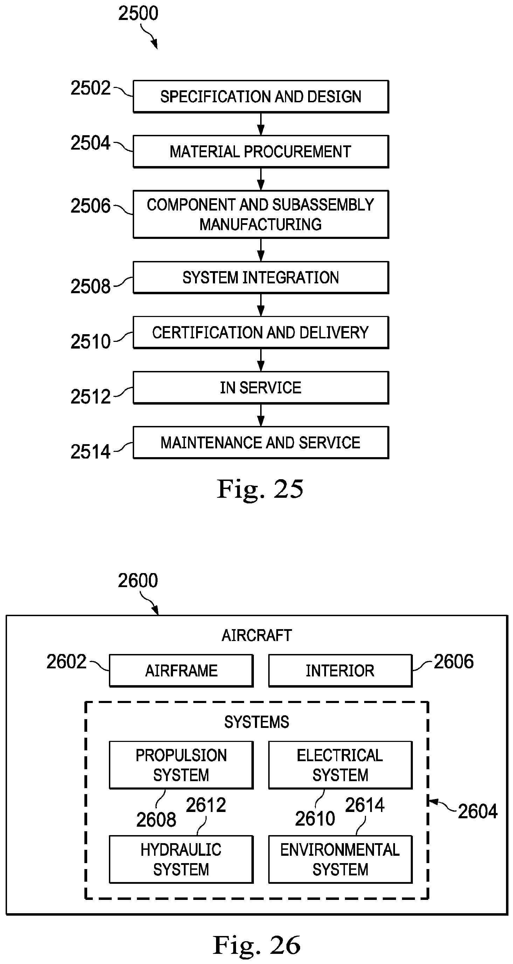

Example embodiments of the disclosure may be described in the context of aircraft manufacturing and service method **2500** as shown in **Figure 25** and aircraft **2600** as shown in **Figure 26****.** Turning first to **Figure 25**, an illustration of an aircraft manufacturing and service method is depicted in accordance with an example embodiment. During pre-production, aircraft manufacturing and service method **2500** may include specification and design **2502** of aircraft **2600** in **Figure 26** and material procurement **2504.**

During production, component and subassembly manufacturing **2506** and system integration **2508** of aircraft **2600** in **Figure 26** takes place. Thereafter, aircraft **2600** in **Figure 26** may go through certification and delivery **2510** in order to be placed in service **2512.** While in service **2512** by a customer, aircraft **2600** in **Figure 26** is scheduled for routine maintenance and service **2514**, which may include modification, reconfiguration, refurbishment, and other maintenance or service.

Each of the processes of aircraft manufacturing and service method **2500** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 26**, an illustration of an aircraft is depicted in which an example embodiment may be implemented. In this example, aircraft **2600** is produced by aircraft manufacturing and service method **2500** in **Figure 25** and may include airframe **2602** with plurality of systems **2604** and interior **2606.** Examples of systems **2604** include one or more of propulsion system **2608,** electrical system **2610**, hydraulic system **2612**, and environmental system **2614.** Any number of other systems may be included. Although an aerospace example is shown, different example embodiments may be applied to other industries, such as the automotive industry.

Apparatuses and methods embodied herein may be employed during at least one of the stages of aircraft manufacturing and service method **2500** in **Figure 25****.** In particular, assembly **304** from **Figure 3** or fuselage assembly **102** from **Figure 1** may be manufactured during any one of the stages of aircraft manufacturing and service method **2500.** For example, without limitation, assembly system **302** from **Figure 3** or assembly system **413** from **Figure 4** may be used to join parts of assembly **304** from **Figure 3** or lap splice **400** from **Figure 4****,** respectively, during at least one of component and subassembly manufacturing **2506**, system integration **2508**, routine maintenance and service **2514**, or some other stage of aircraft manufacturing and service method **2500.** Further, assembly **304** or lap splice **400** may be used to form at least one of airframe **2602** or interior **2606** of aircraft **2600.**

In one illustrative example, components or subassemblies produced in component and subassembly manufacturing **2506** in **Figure 25** may be fabricated or manufactured in a manner similar to components or subassemblies produced while aircraft **2600** is in service **2512** in **Figure 25****.** As yet another example, one or more apparatus embodiments, method embodiments, or a combination thereof may be utilized during production stages, such as component and subassembly manufacturing **2506** and system integration **2508** in **Figure 25****.** One or more apparatus embodiments, method embodiments, or a combination thereof may be utilized while aircraft **2600** is in service **2512** and/or during maintenance and service **2514** in **Figure 25****.** The use of a number of the different example embodiments may substantially expedite the assembly of and/or reduce the cost of aircraft **2600.**

Thus, the example embodiments provide a method and apparatus for easily and efficiently performing automated fastener installation operations. The example embodiments describe single function end effectors that provide a single-sided (one-sided) clamp-up solution to maintain the clamping of parts while other single function end effectors are being swapped out on the opposite side.

Using single function end effectors that perform distinct, specialized tasks may provide for smaller, lighter, and less complex end effectors. The simplicity of these single function end effectors may improve the efficiency, reliability, and maintenance demands of these end effectors and may reduce the overall size of the supporting robotic devices to which these end effectors are coupled.

In one example embodiment, a method for performing a fastener installation is provided. A first mechanical force is applied to a first part and a second mechanical force is applied to a second part to form a clamp-up of the first part and the second part. Air is suctioned through a fastener hole, which is formed by a first hole in the first part that is aligned with a second hole in the second part, to pull the second part towards the first part and thereby maintain the clamp-up of the first part and the second part.

In still yet another example embodiment, a method is provided for aligning a first hole in a first panel with a second hole in a second panel to define a through-hole. A wall that defines the second hole is gripped from within the through-hole to pull the second panel towards the first panel and thereby establish a clamp-up of the first panel and the second panel.

In another example embodiment, a method for maintaining a clamp-up is provided. A first mechanical force and a second mechanical force are applied to a first part and a second part, respectively, to form the clamp-up. The first part forms a first side of the clamp-up and the second part forms a second side of the clamp-up. Air is suctioned, from the first side of the clamp-up, through a fastener hole that extends through the first part and the second part to pull the second part towards the first part. The first mechanical force and the second mechanical force are removed simultaneously while continuing to suction such that the suctioning independently maintains the clamp-up after removal of the first mechanical force and the second mechanical force.

In another example embodiment, a method is provided for maintaining a clamp-up. Air is suctioned from a first side of a clamp-up of a first part and a second part through a fastener hole formed by a first hole in the first part and a second hole in the second part to pull the second part towards the first part and thereby provide the clamp-up of the first part and the second part.

In yet another example embodiment, a method for maintaining a clamp-up is provided. A first end effector at a first side of a panel joint applies a first force via contact with the first side of a panel joint. A second end effector at a second side of the panel joint applies a second force that is equal and opposite to the first force via contact with the second side of the panel joint to establish the clamp-up. The first end effector at the first side of the panel joint maintains the clamp-up after the second end effector is removed from contact with the second side.

In still yet another example embodiment, a method for a single-sided clamp-up is provided. A single function end effector positioned at a first side of a panel joint applies a first force to a first panel of the panel joint. The single function end effector applies a second force that is equal and opposite to the first force to a second panel of the panel joint to thereby provide the single-sided clamp-up of the first panel and the second panel.

In another example embodiment, a method of providing a clamp-up is provided. The method includes reaching through a first hole in a first part to grip a wall that defines a second hole in a second part to thereby pull the second part against the first part.

In an example embodiment, an apparatus for maintaining a clamp-up comprises a nozzle and a suction device. The nozzle has a nozzle diameter greater than a hole diameter of a first hole in a first part. The nozzle is used to apply a first mechanical force to a first side of the clamp-up when engaged with the first part. The suction device is for suctioning air, from the first side of the clamp-up, through a fastener hole formed by the first hole in the first part and a second hole in a second part and through the nozzle. The air is suctioned with a volumetric flow rate sufficient to maintain the clamp-up of the first part and the second part from the first side without requiring an additional force at a second side of the clamp-up.

In another example embodiment, an apparatus for forming a clamp-up comprises an end effector. The end effector is positioned at a first side of a panel joint and applies a first clamp-up force to a first panel of a panel joint and an equal and opposite second clamp-up force to a second panel of the panel joint to provide the clamp-up.

The flowcharts and block diagrams in the different depicted embodiments illustrate the architecture, functionality, and operation of some possible implementations of apparatuses and methods in an example embodiment. In this regard, each block in the flowcharts or block diagrams may represent a module, a segment, a function, and/or a portion of an operation or step.

In some alternative implementations of an example embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

As used herein, the phrase "at least one of," when used with a list of items, means different combinations of one or more of the listed items may be used and only one of the items in the list may be needed. The item may be a particular object, thing, step, operation, process, or category. In other words, "at least one of' means any combination of items or number of items may be used from the list, but not all of the items in the list may be required. For example, without limitation, "at least one of item A, item B, or item C" or "at least one of item A, item B, and item C" may mean item A; item A and item B; item B; item A, item B, and item C; item B and item C; or item A and C. In some cases, "at least one of item A, item B, or item C" or "at least one of item A, item B, and item C" may mean, but is not limited to, two of item A, one of item B, and ten of item C; four of item B and seven of item C; or some other suitable combination.

The description of the different example embodiments has been presented for purposes of illustration and description, and is not intended to be exhaustive or limited to the embodiments in the form disclosed. Many modifications and variations will be apparent to those of ordinary skill in the art. Further, different example embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for maintaining a clamp-up (341), the method comprising:
applying (1702) a first mechanical force (342) and a second mechanical force (344) to a first part (308) and a second part (310), respectively, to form the clamp-up (341), wherein the first part (308) forms a first side (311) of the clamp-up (341) and the second part (310) forms a second side (312) of the clamp-up (341);
suctioning (1704), from the first side (311) of the clamp-up (341), air through a fastener hole (346) that extends through the first part (308) and the second part (310) to pull the second part (310) towards the first part (308); and
removing (1706) the first mechanical force (342) and the second mechanical force (344) simultaneously while continuing to suction such that the suctioning independently maintains the clamp-up (341) after removal of the first mechanical force (342) and the second mechanical force (344).

2. The method of claim 1, wherein applying (1702) the first mechanical force (342) and the second mechanical force (344) comprises:
applying the first mechanical force (342) to the first part (308) using a first tool (332) coupled to a first end effector (324); and
applying the second mechanical force (344) to the second part (310) using a second tool (336) coupled to a second end effector (326),
wherein the second mechanical force (344) is equal and opposite to the first mechanical force (342) until the clamp-up (341) is first established.

3. The method of claim 1 or 2, wherein the suctioning (1704) comprises:
drawing a partial vacuum to grip a hole wall of a portion of the fastener hole (346) in the second part (310) to pull the second part (310) towards the first part (308).

4. An apparatus for maintaining a clamp-up (341), the apparatus comprising:
a nozzle (332) having a nozzle (332) diameter greater than a hole diameter of a first hole (343) in a first part (308), the nozzle (332) being used to apply a first mechanical force (342) to a first side (311) of the clamp-up (341) when engaged with the first part (308); and
a suction device (330) for suctioning air, from the first side (311) of the clamp-up (341), through a fastener hole (346) formed by the first hole (343) in the first part (308) and a second hole (345) in a second part (310) and through the nozzle (332), wherein the air is suctioned with a volumetric flow rate sufficient to maintain the clamp-up (341) of the first part (308) and the second part (310) from the first side (311) without requiring an additional force at a second side (312) of the clamp-up (341).

5. The apparatus of claim 4, further comprising:
an extension system for moving a first tool (332) towards a first side (311) of the clamp-up (341) to apply a force (342) to the first part (308).

6. The apparatus of claim 5, wherein the first tool (332) is the nozzle (332).

7. The apparatus of claim 6, wherein the extension system, the nozzle (332), and the suction device (330) are part of a same end effector (324).

8. The apparatus of claim 4, further comprising:
a first extension system for moving a first tool (332) towards a first side (311) of the clamp-up (341) to apply the first mechanical force (342) to the first part (308); and
a second extension system for moving a second tool (336) towards a second side (312) of the clamp-up (341) up to apply a second mechanical force (344) to the second part (310), wherein the second mechanical force (344) is removed after suctioning of the air through the fastener hole (346) has begun.

9. The apparatus of any of the claims 4-8, further comprising:
an automated guided vehicle; and
an end effector (324) coupled to the automated guided vehicle, wherein the end effector includes the nozzle (332) and the suction device (330).

10. A method for maintaining a clamp-up (341), the method comprising:
applying (2102), by a first end effector (324) at a first side (311) of a panel joint (400), a first force (342) via contact with the first side (311) of a panel joint (400);
applying (2104), by a second end effector (326) at a second side (312) of the panel joint (400), a second force (344) that is equal and opposite to the first force (342) via contact with the second side (312) of the panel joint (400) to establish the clamp-up (341); and
maintaining (2106), by the first end effector (324) at the first side (311) of the panel joint (400), the clamp-up (341) after the second end effector (326) is removed from contact with the second side (312).

11. The method of claim 10, wherein maintaining (2106) the clamp-up (341) comprises:
locating a fastener hole (346) through the panel joint (400); and
drawing a partial vacuum through the fastener hole (346).

12. The method of claim 10 or 11, wherein the panel joint (400) is a lap splice (400) comprised of two skin panels (402, 404).

13. The method of any of the claims 10-12, further comprising:
aligning (1802) a first hole (343) in a first panel (402) of the panel joint (400) with a second hole (345) in a second panel (404) of the panel joint (400) to define a fastener hole (346); and
wherein maintaining the clamp-up (341) comprises:
gripping (1804) a wall (347) that defines the second hole (345) from within the fastener hole (346) to pull the second panel (404) towards the first panel (402) and thereby maintain the clamp-up (341) of the first panel (402) and the second panel (404).

14. The method of any of the claims 10-13, wherein maintaining (2106) the clamp-up (341) comprises:
applying a suction force (802) on one part of the panel joint (400) that forms the second side (312) of the panel joint (400); and
applying a reactive force (804) on another part of the panel joint (400) that forms the first side (311) of the panel joint (400), wherein the suction force (802) and the reactive force (804) establish a force static equilibrium.
